# EUROPÄISCHE PATENTSCHRIFT

(11) **EP 1 017 702 B1**
(45) Veröffentlichungstag und Bekanntmachung des Hinweises auf die Patenterteilung: **12.02.2003**
(21) Anmeldenummer: 98948986.9
(22) Anmeldetag: 17.09.1998
(51) Int. Cl.: C07F 17/00, C08F 10/00, C07B 53/00

(54) **VERFAHREN ZUR SELEKTIVEN HERSTELLUNG RACEMISCHER METALLOCENKOMPLEXE**
METHOD FOR SELECTIVE PRODUCTION OF RACEMIC METALLOCENE COMPLEXES
PROCEDE POUR LA PRODUCTION SELECTIVE DE COMPLEXES DE METALLOCENES RACEMIQUES

(30) Priorität: 23.09.1997 DE 19741876
(43) Veröffentlichungstag der Anmeldung: 12.07.2000
(73) Patentinhaber: Basell Polyolefine GmbH, 50389 Wesseling (DE)
(72) Erfinder: GREGORIUS, Heike, D-55543 Bad Kreuznach (DE); SÜLING, Carsten, D-67227 Frankenthal (DE); BIDELL, Wolfgang, D-67112 Mutterstadt (DE); BRINTZINGER, Hans-Herbert, CH-8274 Taegerswilen (CH); DAMRAU, Hans-Robert-Hellmuth, D-78462 Konstanz (DE); WEBER, Armin, D-88677 Markdorf (DE)
(86) Internationale Anmeldenummer: EP9805918
(87) Internationale Veröffentlichungsnummer: WO99015538

(56) Entgegenhaltungen:
- DE-A- 19 525 184
- WILD, F.R.W.P. ET AL.: "ansa-metallocene derivatives. iv. synthesis and molecular structure of chiral ansa-titanocene derivatives with bridged tetrahydroindenyl ligands" JOURNAL OF ORGANOMETALLIC CHEMISTRY, Bd. 232, 1982, Seiten 233-247, XP002089631
- KUNTZ, B.A. ET AL.: "addition of sterically hindered, chiral crotyl ansa-titanocene complex to aldehydes" JOURNAL OF ORGANOMETALLIC CHEMISTRY, Bd. 497, 1995, Seiten 133-142, XP004023851
- HABAUE, S. ET AL.: "optical resolution of chiral ethylenebis(4,5,6,7-tetrahydro-1-indenyl)z irconium derivatives by high-performance liquid chromatography" CHEMISTRY LETTERS,1996, Seiten 383--384, XP002089633
- SCHMIDT, K. ET AL.: "photochemical isomerization of me2si-bridged zirconocene complexes. application to stereoselective synthesis of ansa-zirconocene binaphtholate stereoisomers" ORGANOMETALLICS, Bd. 16, Nr. 8, 15. April 1997, Seiten 1724-1728, XP002089634
- ERICKSON, M.S. ET AL.: "stereoselectivity in the synthesis of tetramethylethano-bridged 3,3'-di-tetrt-butyltitanocene dichloride" JOURNAL OF ORGANOMETALLIC CHEMISTRY, Bd. 415, 1991, Seiten 75-85, XP002089635

## Beschreibung

Die vorliegende Erfindung betrifft ein Verfahren zur Herstellung von racemischen Metallocenkomplexen durch Umsetzung von verbrückten oder nicht-verbrückten Übergangsmetallaromatkomplexen der allgemeinen Formel I 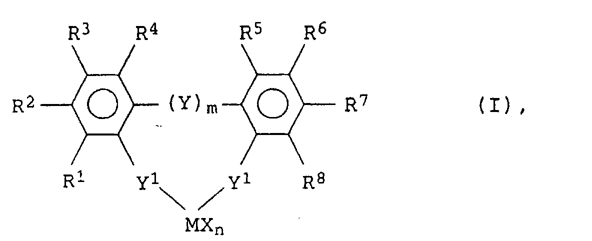 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X: gleich oder verschieden Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: eine ganze Zahl zwischen 1 und 4, wobei n der Wertigkeit von M minus der Zahl 2 entspricht,
- R¹, R⁸: gleich oder verschieden Fluor, Chlor, Brom, Iod, C₁bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen, und die genannten Reste können vollständig oder teilweise mit Heteroatomen substituiert sein,
- R¹⁰, R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- Y, Y¹: gleich oder verschieden 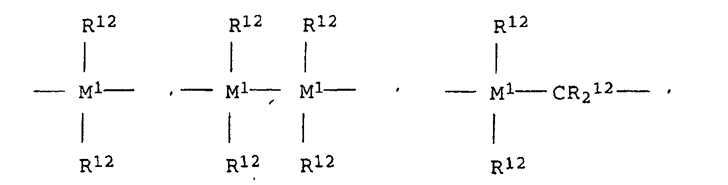 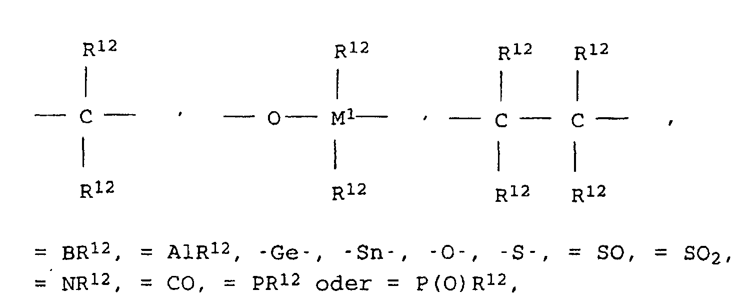
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet,
oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
mit Cyclopentadienylderivaten von Alkali- oder Erdalkalimetallen und gegebenenfalls anschließende Substitution des verbrückten Aromatliganden oder der beiden nicht verbrückten Aromatliganden; racemische Metallocenkomplexe der allgemeinen Formel III 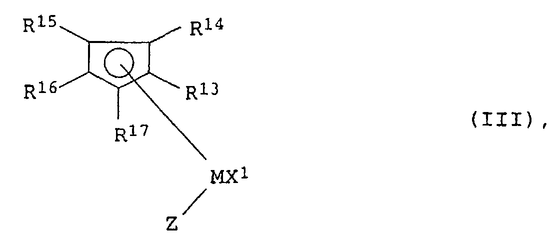 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X¹: 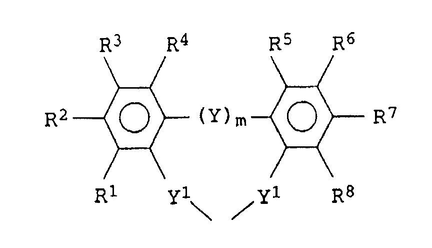
wobei:
- R¹, R⁸: gleich oder verschieden Fluor, Chlor, Brom, Iod, C₁bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein,
- Y, Y¹: gleich oder verschieden 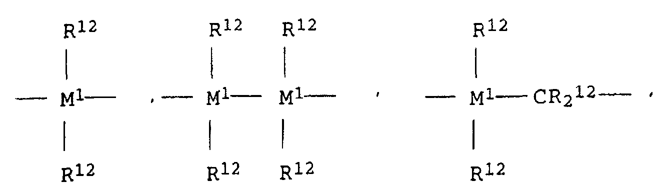 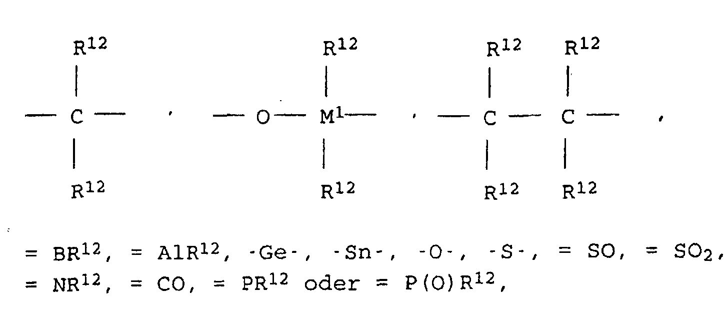
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet,
oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
- R¹³ bis R¹⁷: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
- R¹⁸: gleich oder verschieden C₁- bis C₁₀-Alkyl, C₆- bis C₁₅-Aryl oder C₃- bis C₁₀-Cycloalkyl,
- Z: für 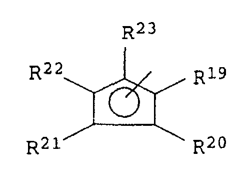 steht,
wobei die Reste
- R¹⁹ bis R²³: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
- R²⁴: gleich oder verschieden C₁- bis C₁₀-Alkyl, C₆- bis C₁₅-Aryl oder C₃- bis C₁₀-Cycloalkyl,
oder wobei die Reste
- R¹⁶ und Z: gemeinsam eine Gruppierung -[T(R²⁵)(R²⁶)]_{q}-E- bilden, in der
- T: gleich oder verschieden sein kann und für Silicium, Germanium, Zinn oder Kohlenstoff steht,
- R²⁵, R²⁶: für Wasserstoff, C₁- bis C₁₀-Alkyl, C₃- bis C₁₀-Cycloalkyl oder C₆- bis C₁₅-Aryl
- q: für die Zahlen 1, 2, 3 oder 4,
- E: für 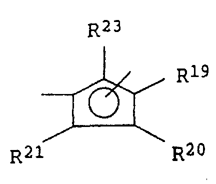 oder A steht, wobei A ―O―, ―S―, 〉NR²⁷ oder 〉PR²⁷ bedeutet,
- mit R²⁷: gleich oder verschieden C₁- bis C₁₀-Alkyl, C₆- bis C₁₅-Aryl, C₃- bis C₁₀-Cycloalkyl, Alkylaryl oder Si(R²⁸)₃
- mit R²⁸: gleich oder verschieden C₁- bis C₁₀-Alkyl, C₆- bis C₁₅-Aryl, C₃- bis C₁₀-Cycloalkyl oder Alkylaryl
und die Verwendung von racemischen Metallocenkomplexen gemäß Formel III als Katalysatoren oder als Bestandteil von Katalysatoren für die Polymerisation von olefinisch ungesättigten Verbindungen oder als Reagentien oder als Katalysatoren in der Stereoselektivensynthese.

Neben der stereospezifischen Olefinpolymerisation bietet in zunehmendem Maße die enantioselektive organische Synthese interessante Anwendungsmöglichkeiten für chirale Metallocenkomplexe von Metallen der III. - VI. Nebengruppe des Periodensystems der Elemente. Beispielhaft seien hier enantioselektive Hydrierungen prochiraler Substrate genannt, beispielsweise prochiraler Olefine, wie in R. Waymouth, P. Pino, J. Am. Chem. Soc. 112 (1990), S. 4911-4914 beschrieben, oder prochiraler Ketone, Imine und Oxime, wie in der WO 92/9545 beschrieben.

Weiterhin seien genannt die Herstellung optisch aktiver Alkene durch enantioselektive Oligomerisation, wie in W. Kaminsky et al., Angew. Chem. 101 (1989), S. 1304-1306 beschrieben, sowie die enantioselektive Cyclopolymerisation von 1,5-Hexadienen, wie in R. Waymouth, G. Coates, J. Am. Chem. Soc. 113 (1991), S. 6270 - 6271 beschrieben.

Die genannten Anwendungen erfordern im allgemeinen den Einsatz eines Metallocenkomplexes in seiner racemischen Form, d.h. ohne meso-Verbindungen. Von dem bei der Metallocensynthese des Standes der Technik anfallenden Diastereomerengemisch (rac.- u. meso-Form) muß zunächst die meso-Form abgetrennt werden. Da die meso-Form verworfen werden muß, ist die Ausbeute an racemischem Metallocenkomplex gering.

M.S.Erickson et al, beschreiben in: Journal of Organometallic Chemistry 415 (1991), 75-85, "Stereoselectivity in the synthesis of tetramethylethano-bridged 3,3'-di-tert.-butyltitanocene dichloride" die Synthese eines racemischen Metallocen-Binaphtholatkomplexes durch Umsetzung des lithiierten Biscyclopentadienylliganden mit einem 1:1 Addukt aus 1,1'-Bi-2-naphtholat und Titantetrachlorid.

Aufgabe der vorliegenden Erfindung war es daher, ein Verfahren zur selektiven Herstellung von racemischen, praktisch (NMR-Meßgenauigkeit) meso-Isomer-freien Metallocenkomplexen zu finden.

Eine weitere Aufgabe war es, racemische Metallocenkomplexe zu finden, welche entweder direkt als oder in Katalysatoren, vornehmlich für die Olefinpolymerisation, verwendet werden können, oder die nach Modifizierung, beispielsweise nach der Substitution eines "Hilfsliganden", als, oder in Katalysatoren, vornehmlich für die Olefinpoiymerisation, verwendet werden können, oder die als Reagenzien oder Katalysatoren in der stereoselektiven Synthese verwendet werden können.

Demgemäß wurde das in den Patentansprüchen definierte Verfahren, die racemischen Metallocenkomplexe III, sowie deren Verwendung als Katalysatoren oder in Katalysatoren für die Polymerisation von olefinisch ungesättigten Verbindungen oder als Reagenzien oder Katalysatoren in der stereoselektiven Synthese gefunden.

Die Begriffe "meso-Form", "Racemat" und somit auch "Enantiomere" in Verbindung mit Metallocenkomplexen sind bekannt und beispielsweise in Rheingold et al., Organometallics 11 (1992), S. 1869 - 1876 definiert.

Der Begriff "praktisch meso-frei" wird hier so verstanden, daß mindestens 90 % einer Verbindung in Form des Racemats vorliegen.

Die erfindungsgemäßen, verbrückten oder unverbrückten Übergangsmetallaromatkomplexe haben die allgemeine Formel I 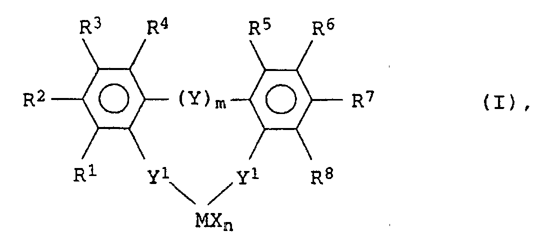 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X: gleich oder verschieden Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: eine ganze Zahl zwischen 1 und 4, wobei n der Wertigkeit von M minus der Zahl 2 entspricht,
- R¹, R⁸: gleich oder verschieden Fluor, Chlor, Brom, Iod, C₁bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
- R² bis R⁷: gleich oder verschieden Wasserstoff, C₁- bis C₂₀-Alkyl, 3- bis 8-gliedriges Cycloalkyl - das seinerseits ein C₁ - bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein,
- R¹⁰, R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- Y, Y¹: gleich oder verschieden 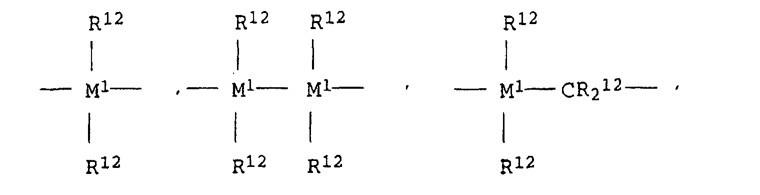 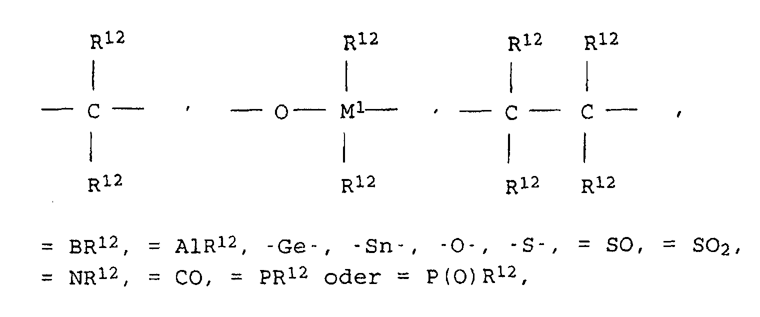
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet,
oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können.

Bevorzugte Metalle M sind Titan, Zirkonium und Hafnium, insbesondere Zirkonium.

Gut geeignete Substituenten X sind Fluor, Chlor, Brom, Iod, vorzugsweise Chlor, weiterhin C₁- bis C₆-Alkyl, wie Methyl, Ethyl, n-Propyl, iso-Propyl, n-Butyl, sec.-Butyl, i-Butyl, vorzugsweise tert.-Butyl. Außerdem gut geeignet als Substituenten X sind Alkoholate -OR¹⁰ oder Amide -NR¹⁰R¹¹ mit R¹⁰ oder R¹¹ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest. Derartige Reste X sind beispielsweise Methyl, Ethyl, i-Propyl, tert.-Butyl, Phenyl, Naphthyl, p-Tolyl, Benzyl, Trifluormethyl, Pentafluorphenyl.

Die Substituenten R¹ und R⁸ sind gleich oder verschieden und bedeuten Fluor. Chlor, Brom, Iod, C₁- bis C₂₀-Alkyl, 3- bis 8-gliedriges Cycloalkyl - das seinerseits ein C₁- bis C₁₀-Alkylrest, wie Methyl, Ethyl Propyl tragen kann. Beispiele für derartigen Cycloalkylreste sind Cyclopropyl, Cyclopentyl, vorzugsweise Cyclohexyl, Norbornyl. Weiterhin bedeuten die Substituenten R¹ und R⁸ C₆- bis C₁₅-Aryl, wie Phenyl, Naphthyl; Alkylaryl mit 1 bis 10 C-Atomen im Alkylrest und 6 bis 20 C-Atomen im Arylrest, wie p-Tolyl; Arylalkyl mit 1 bis 10 C-Atomen im Alkylrest und 6 bis 20 C-Atomen im Arylrest, wie Benzyl, Neophyl oder sie bedeuten Triorganosilyl wie Si(R⁹)₃ mit R⁹ gleich oder verschieden C₁- bis C₂₀-Alkyl, C₃- bis C₁₀-Cycloalkyl, C₆- bis C₁₅-Aryl, beispielsweise Trimetylsilyl, tert.-Butyldimethylsilyl, Triphenylsilyl. Die genannten Reste können selbstverständlich auch teilweise oder vollständig mit Heteroatomen substituiert sein, beispielsweise mit S-, N-, O-, oder Halogenatom-haltigen Strukturelementen. Exemplarisch seien für derartige substituierte Reste R¹ und R⁸ genannt die Trifluormethyl-, Pentafluorethyl-, Heptafluorpropyl-, Heptafluorisopropyl-, Pentafluorphenylgruppe.

Bevorzugte Substituenten R¹ und R⁸ sind solche, die viel Raum in Anspruch nehmen. Üblicherweise nennt man solche Substituenten sperrige Substituenten. Sie zeichnen sich dadurch aus, daß sie sterische Hinderung hervorrufen können.

Im allgemeinen versteht man unter diesen Gruppen kohlenstoffoder siliziumorganische Reste mit hohem Raumbedarf (sperrige Reste), aber auch Fluor und vorzugsweise Chlor, Brom und Iod. Die Anzahl der Kohlenstoffatome die in derartigen kohlenstoff- oder siliziumorganischen Resten enthalten sind, liegt üblicherweise nicht unter drei.

Bevorzugte nicht-aromatische, sperrige Reste sind solche kohlenstoff- oder siliziumorganischen Reste, die in α-Stellung oder höherer Stellung verzweigt sind. Beispiele für derartige Reste sind verzweigte C₃- bis C₂₀-aliphatische, C₉- bis C₂₀-araliphatische Reste und C₃- bis C₁₀-cycloaliphatische Reste, wie iso-Propyl, tert.-Butyl, iso-Butyl, neo-Pentyl, 2-Methyl-2-phenylpropyl (Neophyl), Cyclohexyl, 1-Methylcyclohexyl, Bicyclo[2.2.1]-hept-2-yl (2-Norbornyl), Bicyclo[2.2.1]hept-1-yl (1-Norbornyl), Adamantyl. Weiterhin kommen als solche Reste siliziumorganische Reste mit drei bis dreißig Kohlenstoffatomen in Frage, beispielsweise Trimethylsilyl, Triethylsilyl, Triphenylsilyl, tert.-Butyldimethylsily, Tritolylsilyl oder Bis(trimethylsilyl)methyl.

Bevorzugte aromatische, sperrige Gruppen sind in der Regel C₆- bis C₂₀-Arylreste, wie Phenyl, 1- oder 2-Naphthtyl oder vorzugsweise C₁- bis C₁₀-alkyl- oder C₃- bis C₁₀-cycloalkylsubstituierte aromatische Reste wie 2,6-Dimethylphenyl, 2,6-Di-tert.-Butylphenyl, Mesityl.

Ganz besonders bevorzugte Substituenten R¹ und R⁸ sind i-Propyl, tert.-Butyl, Trimethylsilyl, Cyclohexyl, i-Butyl, Trifluormethyl, 3,5-Dimethylphenyl.

Im bevorzugten Substitutionsmuster sind R¹ und R⁸ in Formel I gleich.

Die Substituenten R² bis R⁷ sind gleich oder verschieden und bedeuten Wasserstoff, C₁- bis C₂₀-Alkyl, 3- bis 8-gliedriges Cycloalkyl - das seinerseits ein C₁- bis C₁₀-Alkylrest, wie Methyl, Ethyl, Propyl tragen kann. Beispiele für derartigen Cycloalkylreste sind Cyclopropyl, Cyclopentyl, vorzugsweise Cyclohexyl, Norbornyl. Weiterhin bedeuten die Substituenten R² bis R⁷ C₆- bis C₁₅-Aryl, wie Phenyl, Naphthyl, Alkylaryl mit 1 bis 10 C-Atomen im Alkylrest und 6 bis 20 C-Atomen im Arylrest, wie p-Tolyl, Arylalkyl mit 1 bis 10 C-Atomen im Alkylrest und 6 bis 20 C-Atomen im Arylrest, wie Benzyl, Neophyl oder sie bedeuten Triorganosilyl wie Si(R⁹)₃ mit R⁹ gleich oder verschieden C₁- bis C₂₀-Alkyl, C₃bis C₁₀-Cycloalkyl, C₆- bis C₁₅-Aryl, beispielsweise Trimetylsilyl, tert.-Butyldimethylsilyl, Triphenylsilyl. Die Reste R² bis R⁷ können aber auch derartig miteinander verbunden sein, daß benachbarte Reste für 4 bis 15 C-Atome aufweisende gesättigte, teilweise gesättigte oder ungesättigte cyclische Gruppen stehen. Vorzugsweise sind die Reste R³ und R⁴ und/oder die Reste R⁵ und R⁶ mit einer C₂-Brücke derartig verbunden, daß ein benzoanelliertes Ringsystem (Naphthylderivat) entsteht. Die genannten Reste R² bis R⁷ können selbstverständlich auch teilweise oder vollständig mit Heteroatomen substituiert sein, beispielsweise mit S-, N-, O-, oder Halogenatom-haltigen Strukturelementen. Exemplarisch seien für derartige substituierte Reste R² bis R⁷ genannt die Trifluormethyl-, Pentafluorethyl-, Heptafluorpropyl-, Heptafluorisopropyl-, Pentafluorphenylgruppe.

Besonders bevorzugt sind die Reste R² und R⁷ gleich und bedeuten Wasserstoff und R³, R⁴, R⁵, R⁶ haben die bereits genannte Bedeutung.

Als Brückenglieder Y, Y¹ kommen die folgenden in Frage: 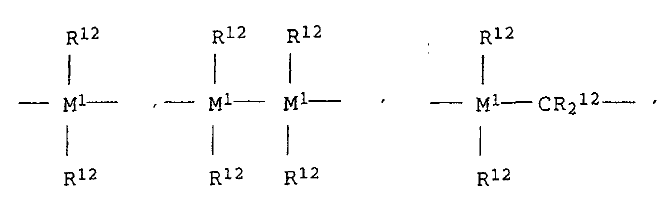 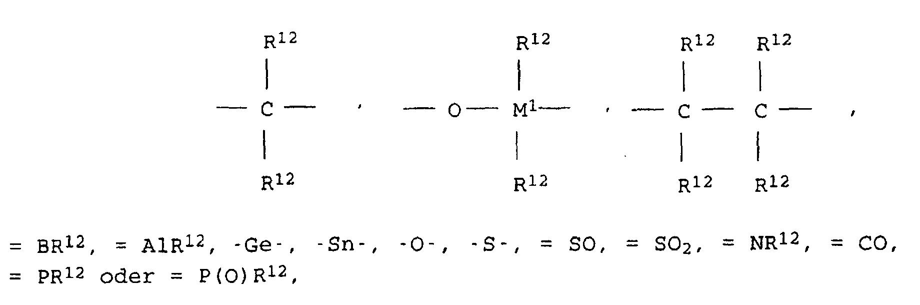 wobei
- R¹²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden,
- M¹: Silicium, Germanium oder Zinn ist.

Bevorzugte Brückenglieder Y, Y¹ sind Methylen -CH₂-, S, O, -C(CH₃)₂-, wobei m in Formel I vorzugsweise 1 oder 2 ist; Y¹ ist ganz besonders bevorzugt gleich und bedeutet Sauerstoff -O-. Ganz besonders bevorzugt sind Phenolattyp-Strukturen in welchen m in Formel I 0 ist, das heißt, daß die aromatischen Ringsysteme direkt miteinander verknüpft sind, beispielsweise zum Biphenolderivat.

Von den erfindungsgemäßen unverbrückten Übergangsmetallaromatkomplexen der allgemeinen Formel I sind diejenigen bevorzugt, in denen Y für Reste R' und R" steht, die gleich oder verschieden sind und Fluor, Chlor, Brom, Iod, C₁- bis C₂₀-Alkyl oder 3- bis 8-gliedriges Cycloalkyl - das seinerseits ein C₁- bis C₁₀-Alkylrest, wie Methyl, Ethyl, Propyl tragen kann - bedeuten. Beispiele für derartige Cycloalkylreste sind Cyclopropyl, Cyclopentyl, vorzugsweise Cyclohexyl, Norbornyl. Weiterhin bedeuten die Substituenten R' und R" C₆- bis C₁₅-Aryl, wie Phenyl, Naphthyl; Alkylaryl mit 1 bis 10 C-Atomen im Alkylrest und 6 bis 20 C-Atomen im Arylrest, wie p-Tolyl; Arylalkyl mit 1 bis 10 C-Atomen im Alkylrest und 6 bis 20 C-Atomen im Arylrest, wie Benzyl, Neophyl oder sie bedeuten Triorganosilyl wie Si(R⁹)₃ mit R⁹ gleich oder verschieden C₁- bis C₂₀-Alkyl, C₃- bis C₁₀-Cycloalkyl, C₆- bis C₁₅-Aryl, beispielsweise Trimetylsilyl, tert.-Butyldimethylsilyl, Triphenylsilyl. Die genannten Reste können selbstverständlich auch teilweise oder vollständig mit Heteroatomen substituiert sein, beispielsweise mit S-, N-, O-, oder Halogenatom-haltigen Strukturelementen. Exemplarisch seien für derartige substituierte Reste R' und R" genannt die Trifluormethyl-, Pentafluorethyl-, Heptafluorpropyl-, Heptafluorisopropyl-, Pentafluorphenylgruppe.

Besonders bevorzugt sind R' und R" gleich. Ganz besonders bevorzugte unverbrückte Übergangsmetallaromatkomplexe sind solche, in der R¹, R⁸, R' und R" gleich sind.

Die verbrückten oder nicht-verbrückten Übergangsmetallaromatkomplexe I werden im allgemeinen nach Methoden hergestellt, die dem Fachmann bekannt sind.

Die Synthese der verbrückten Übergangsmetallphenolatkomplexe ist beispielsweise in C. J. Schaverien, J. Am. Chem. Soc. (1995), Seiten 3008 bis 3012, beschrieben. Als gut geeignet hat sich hierbei folgendes Vorgehen erwiesen, wobei in der Regel im Temperaturbereich von 0 bis 80°C, vorzugsweise zunächst bei ca. 20°C gearbeitet wird und die Reaktion dann durch Kochen am Rückfluß vervollständigt wird. Das Biphenol wird zunächst in einem Lösungsmittel, beispielsweise Tetrahydrofuran (THF) deprotoniert, zum Beispiel mit Natriumhydrid oder n-Butyllithium, und anschließend die Übergangsmetallverbindung, beispielsweise das Halogenid, wie Titan-, Zirkonium- oder Hafniumtetrachlorid, vorteilhaft in Form des Bis-THF-Adduktes, hinzugegeben. Nach erfolgter Umsetzung wird das Produkt in der Regel nach Abtrennung von Salzen durch Auskristallisieren erhalten. Die Herstellung von nicht-verbrückten Übergangsmetallphenolatkomplexen kann beispielsweise nach H. Yasuda et. al, J. Organomet. Chem. 473 (1994), Seiten 105 bis 116 erfolgen.

Die erfindungsgemäßen, verbrückten oder nicht-verbrückten Übergangsmetallaromatkomplexe I enthalten in der Regel noch 2 bis 4 Äquivalente einer Lewis-Base, welche in der Regel über die Syntheseroute eingeschleppt wird. Als derartige Lewisbasen sind beispielsweise zu nennen Ether, wie Diethylether oder Tetrahydrofuran (THF). Es ist aber auch möglich die Übergangsmetallaromatkomplexe Lewis-Basen-frei zu erhalten, beispielsweise durch Trocknung im Vakuum oder Wahl anderer Lösungsmittel bei der Synthese. Derartige Maßnahmen sind dem Fachmann bekannt.

Die erfindungsgemäßen racemischen Metallocenkomplexe werden hergestellt durch Umsetzung der verbrückten oder nicht-verbrückten Übergangsmetallaromatkomplexe I mit Cyclopentadienylderivaten der Alkali- oder Erdalkalimetalle. Vorzugsweise setzt man Übergangsmetallaromatkomplexe I ein, in welchen M Zirkonium bedeutet und die Reste R¹ und R⁸ die oben beschriebene, bevorzugte Bedeutung haben. Sehr gut geeignet sind Dichlorobis(6-tert.-butyl-4-methylphenoxy)zirkon · (THF)₂ und die in den Beispielen genannten Zirkon-Phenolat-Verbindungen.

Prinzipiell kommen als Cyclopentadienylderivate der Alkali- oder Erdalkalimetalle diejenigen in Frage, welche nach der Umsetzung mit den erfindungsgemäßen, verbrückten Übergangsmetallaromatkomplexen I selektiv, praktisch meso-Isomeren-freie, racemische Metallocenkomplexe liefern.

Die erfindungsgemäßen racemischen Metallocenkomplexe können verbrückt sein, müssen es aber nicht sein. Es genügt im allgemeinen eine hohe Rotationsbarriere, insbesondere im Temperaturbereich von 20 bis 80°C, (bestimmbar mit der Methode der ¹H und/oder ¹³C-NMR-Spektroskopie) der unverbrückten Cyclopentadienyltyp-Liganden im Metallocen, damit die Metallocenkomplexe, direkt in ihrer racemischen Form isoliert werden können, ohne daß sie sich in die meso-Form umwandeln können. Die Rotationsbarriere, die dies gewährleistet, liegt üblicherweise über 20 kJ/mol.

Gut geeignete Cyclopentadienderivate von Alkali- oder Erdalkalimetallen sind solche der allgemeinen Formel II 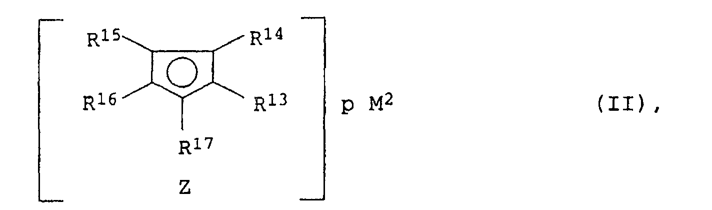 in der die Substituenten und Indizes folgende Bedeutung haben:
- M²: Li, Na, K, Rb, Cs, Be, Mg, Ca, Sr, Ba,
- R¹³ bis R¹⁷: gleich oder verschieden Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
- R¹⁸: gleich oder verschieden C₁- bis C₁₀-Alkyl, C₆- bis C₁₅-Aryl oder C₃- bis C₁₀-Cycloalkyl,
- Z: für 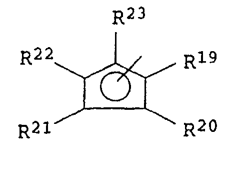 steht,
wobei die Reste
- R¹⁹ bis R²³: gleich oder verschieden Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
- R²⁴: gleich oder verschieden C₁- bis C₁₀-Alkyl, C₆- bis C₁₅-Aryl oder C₃- bis C₁₀-Cycloalkyl,
oder wobei die Reste
- R¹⁶ und Z: gemeinsam eine Gruppierung -[T(R²⁵) (R²⁶)]ₙ-E- bilden, in der
- T: gleich oder verschieden sein kann und für Silicium, Germanium, Zinn oder Kohlenstoff steht,
- R²⁵, R²⁶: für Wasserstoff, C₁- bis C₁₀-Alkyl, C₃- bis C₁₀-Cycloalkyl oder C₆- bis C₁₅-Aryl
- n: für die Zahlen 1, 2, 3 oder 4,
- E: für 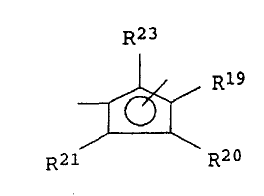 oder A steht, wobei A ―O―, ―S―, 〉NR²⁷ oder 〉PR²⁷ bedeutet,
- mit R²⁷: gleich oder verschieden C₁- bis C₁₀-Alkyl, C₆- bis C₁₅-Aryl, C₃- bis C₁₀-Cycloalkyl, Alkylaryl oder Si(R²⁸)₃
- mit R²⁸: gleich oder verschieden C₁- bis C₁₀-Alkyl, C₆- bis C₁₅-Aryl, C₃- bis C₁₀-Cycloalkyl oder Alkylaryl,
- wobei: p = 1 für Be, Mg, Ca, Sr, Ba und
p = 2 für Li, Na, K, Rb, Cs.

Bevorzugte Verbindungen der Formel II sind solche in welchen M² Lithium, Natrium und insbesondere Magnesium bedeutet. Ferner sind solche Verbindungen der Formel II a) 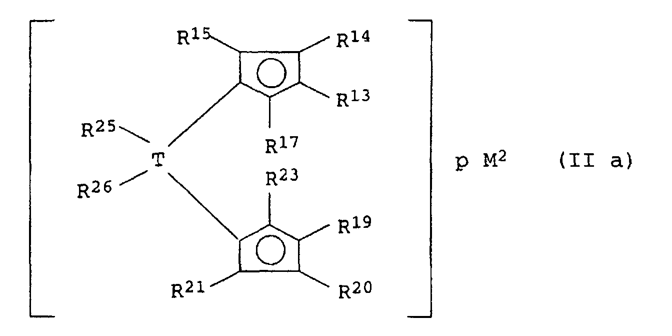 besonders bevorzugt in welchen M² Magnesium, R¹⁷ und R²³ von Wasserstoff verschiedene Substituenten bedeuten, wie C₁- bis C₁₀-Alkyl, also Methyl, Ethyl, n-Propyl, i-Propyl, n-Butyl, sec.-Butyl, tert.-Butyl, i.-Butyl, Hexyl, weiterhin C₆-C₁₀-Aryl, wie Phenyl oder Trialkylsilyl, wie Trimethylsilyl, T(R²⁵R²⁶) für Bis-C₁-C₁₀-alkylsilyl oder Bis-C₆-C₁₀-arylsilyl steht wie Dimetylsilyl, Diphenylsilyl, weiterhin für 1,2-Ethyandiyl Methylen und die Reste R¹³ bis R¹⁵ und R¹⁹ bis R²⁵ die bereits genannte Bedeutung haben und insbesondere ein Indenyltyp-Ringsystem oder ein Benzoindenyltyp-Ringsystem bilden.
Ganz besonders bevorzugte Verbindungen II sind jene, welche in den Beispielen beschrieben werden und außerdem
Dimethylsilandiylbis(3-tert.-butyl-5-methylcyclopentadienyl)-magnesium
Diethylsilandiylbis(3-tert.-butyl-5-methylcyclopentadienyl)-magnesium
Dimethylsilandiylbis(3-tert.-butyl-5-ethylcyclopentadienyl)-magnesium
Dimethylsilandiylbis(3-tert.-pentyl-5-methylcyclopentadienyl)-magnesium
Dimethylsilandiylbis(2,4,7-trimethylindenyl)magnesium
1,2-Ethandiylbis(1-{2,4,7-trimethylindenyl)}magnesium
Dimethylsilandiylbis(1-indenyl)magnesium
Dimethylsilandiylbis(4,5,6,7-tetrahydro-1-indenyl)magnesium
Dimethylsilandiylbis(2-methylindenyl)magnesium
Phenyl(methyl)silandiylbis(2-methylindenyl)magnesium
Diphenylsilandiylbis(2-methylindenyl)magnesium
Dimethylsilandiylbis(2-methyl-4,5,6,7-tetrahydro-1-indenyl)-magnesium
Dimethylsilandiylbis(2,4-dimethyl-6-isopropylindenyl)magnesium
Dimethylsilandiylbis(2-methyl-1-benzindenyl)magnesium
Dimethylsilandiylbis(2-ethyl-l-benzindenyl)magnesium
Dimethylsilandiylbis (2-propyl-1-benzindenyl)magnesium
Dimethylsilandiylbis(2-phenyl-l-benzindenyl)magnesium
Diphenylsilandiylbis(2-methyl-1-benzindenyl)magnesium
Phenylmethylsilandiylbis(2-methyl-1-benzindenyl)magnesium
Ethandiylbis(2-methyl-1-benzindenyl)magnesium
Dimethylsilandiylbis (2-methyl-1-tetrahydrobenzindenyl)magnesium
Dimethylsilandiylbis(2-methyl-4-isopropyl-1-indenyl)magnesium
Dimethylsilandiylbis(2-methyl-4-phenyl-1-indenyl)magnesium
Dimethylsilandiylbis(2-methyl-4-naphtyl-1-indenyl)magnesium
Dimethylsilandiylbis(2-methyl-4-{3,5-trifluoromethyl}phenyl-1-indenyl)magnesium
Dimethylsilandiylbis(2-ethyl-4-isopropyl-1-indenyl)magnesium
Dimethylsilandiylbis(2-ethyl-4-phenyl-1-indenyl)magnesium
Dimethylsilandiylbis(2-ethyl-4-naphtyl-1-indenyl)magnesium
Dimethylsilandiylbis(2-ethyl-4-{3,5-trifluoromethyl}phenyl-1-indenyl)magnesium
Ethandiylbis(2-methyl-4-phenyl-1-indenyl)magnesium
Ethandiylbis(2-methyl-4-naphtyl-1-indenyl)magnesium
Ethandiylbis(2-methyl-4-{3,5-di-(trifluoromethyl)}phenyl-1-indenyl)magnesium

Derartige Alkali- oder Erdalkalimetallverbindungen II lassen sich nach literaturbekannten Methoden erhalten, beispielsweise durch die, vorzugsweise stöchiometrische, Umsetzung einer Organometallverbindung oder eines Hydrids des Alkali- oder Erdalkalimetalls mit dem entsprechenden Cyclopentadienyltyp-Kohlenwasserstoff. Geeignete Organometallverbindungen sind beispielsweise n-Butyllithium oder Di-n-butylmagnesium.

Die Umsetzung der verbrückten oder nicht-verbrückten Übergangsmetallaromatkomplexe I mit den Cyclopentadienylderivaten von Alkali- oder Erdalkalimetallen, vorzugsweise der Formeln II oder IIa) findet üblicherweise in einem organischen Lösungs- oder Suspensionsmittel, vorzugsweise in einem Ether wie Diethylether, THF und im Temperaturbereich von - 78 bis 100 °C, vorzugsweise im Temperaturbereich von 0 bis 60°C statt. Das molare Verhältnis des Übergangsmetallaromatkomplexes I zu dem Cyclopentadienylderivat von Alkali- oder Erdalkalimetallen liegt üblicherweise im Bereich von 0,8 : 1 bis 1 : 1,2, vorzugsweise bei 1 : 1.

Die erfindungsgemäßen, racemischen Metallocenkomplexe sind vorzugsweise solche der allgemeinen Formel III 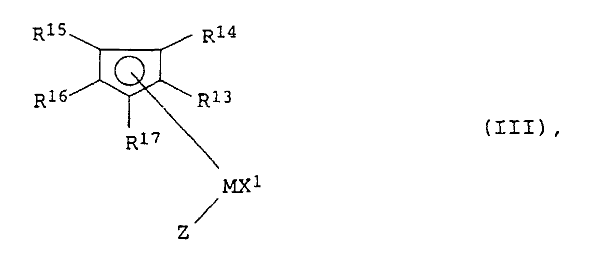 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X¹: 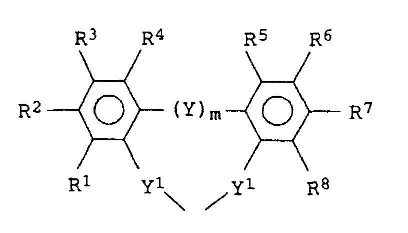
wobei:
- R¹, R⁸: gleich oder verschieden Fluor, Chlor, Brom, Iod, C₁bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein,
- Y, Y¹: gleich oder verschieden 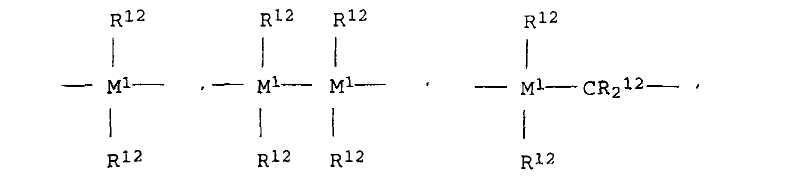 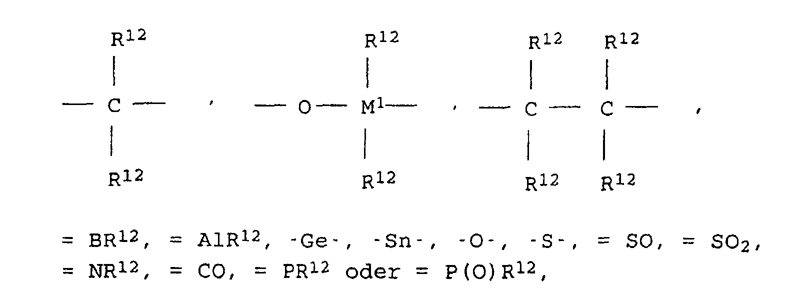
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet,
oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
- R¹³ bis R¹⁷: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
- R¹⁸: gleich oder verschieden C₁- bis C₁₀-Alkyl, C₆- bis C₁₅-Aryl oder C₃- bis C₁₀-Cycloalkyl,
- Z: für 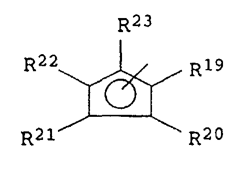 steht,
wobei die Reste
- R¹⁹ bis R²³: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
- R²⁴: gleich oder verschieden C₁- bis C₁₀-Alkyl, C₆- bis C₁₅-Aryl oder C₃- bis C₁₀-Cycloalkyl,
oder wobei die Reste
- R¹⁶ und Z: gemeinsam eine Gruppierung -[T(R²⁵)(R²⁶)]_{q}-E- bilden, in der
- T: gleich oder verschieden sein kann und für Silicium, Germanium, Zinn oder Kohlenstoff steht,
- R²⁵, R²⁶: für Wasserstoff, C₁- bis C₁₀-Alkyl, C₃- bis C₁₀-Cycloalkyl oder C₆- bis C₁₅-Aryl
- q: für die Zahlen 1, 2, 3 oder 4,
- E: für 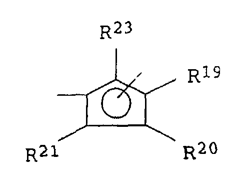 oder A steht, wobei A ―O―, ―S―, 〉NR²⁷ oder 〉PR²⁷ bedeutet,
- mit R²⁷: gleich oder verschieden C₁- bis C₁₀-Alkyl, C₆- bis C₁₅-Aryl, C₃- bis C₁₀-Cycloalkyl, Alkylaryl oder Si(R²⁸)₃
- mit R²⁸: gleich oder verschieden C₁- bis C₁₀-Alkyl, C₆- bis C₁₅-Aryl, C₃- bis C₁₀-Cycloalkyl oder Alkylaryl.

Bevorzugte Verbindungen der Formel III sind solche in welchen M Titan, Hafnium und insbesondere Zirkonium bedeutet. Ferner sind verbrückte Verbindungen der Formel III besonders bevorzugt (ansa-Metallocene) in welchen R¹⁷ und R²³ von Wasserstoff verschiedene Substituenten bedeuten, wie C₁- bis C₁₀-Alkyl, also Methyl, Ethyl, n-Propyl, i-Propyl, n-Butyl, sec.-Butyl, tert.-Butyl, 1.-Butyl, Hexyl, weiterhin C6-C₁₀-Aryl, wie Phenyl oder Trialkylsilyl, wie Trimethylsilyl, T(R²⁵R²⁶) für Bis-C₁-C₁₀-alkylsilyl oder Bis-C₆-C₁₀-arylsilyl steht wie Dimetylsilyl, Diphenylsilyl, weiterhin für 1,2-Ethandiyl, Methylen und die Reste R¹³ bis R¹⁵ und R¹⁹ bis R²⁵ die bereits genannte Bedeutung haben und insbesondere ein Indenyltyp-Ringsystem oder ein Benzoindenyltyp-Ringsystem bilden.
Ganz besonders bevorzugte Verbindungen III sind jene, welche in den Beispielen beschrieben werden, und außerdem
Dimethylsilandiylbis(3-tert.-butyl-5-methylcyclopentadienyl) [bis(6-tert.-butyl-4-methyl-phenoxy)]zirkon
Diethylsilandiylbis(3-tert.-butyl-5-methylcyclopentadienyl) [bis(6-tert.-butyl-4-methyl-phenoxy)]zirkon
Dimethylsilandiylbis(3-tert.-butyl-5-ethylcyclopentadienyl) [bis(6-tert.-butyl-4-methyl-phenoxy)]zirkon
Dimethylsilandiylbis(3-tert.-pentyl-5-methylcyclopentadienyl) [bis(6-tert.-butyl-4-methyl-phenoxy)]zirkon
Dimethylsilandiylbis(2,4,7-trimethylindenyl) [bis(6-tert.-butyl-4-methyl-phenoxy)]zirkon
1,2-Ethandiylbis(1-{2,4,7-trimethylindenyl)} [bis(6-tert.-butyl-4-methyl-phenoxy)]zirkon
Dimethylsilandiylbis(1-indenyl) [bis(6-tert.-butyl-4-methyl-phenoxy)]zirkon
Dimethylsilandiylbis(4,5,6,7-tetrahydro-1-indenyl) [bis(6-tert.-butyl-4-methyl-phenoxy)]zirkon
Dimethylsilandiylbis(2-methylindenyl) [bis(6-tert.-butyl-4-methyl-phenoxy)]zirkon
Phenyl(methyl)silandiylbis(2-methylindenyl) [bis(6-tert.-butyl-4-methyl-phenoxy)]zirkon
Diphenylsilandiylbis(2-methylindenyl) [bis(6-tert.-butyl-4-methyl-phenoxy)]zirkon
Dimethylsilandiylbis(2-methyl-4,5,6,7-tetrahydro-1-indenyl) [bis(6-tert.-butyl-4-methyl-phenoxy)]zirkon
Dimethylsilandiylbis(2,4-dimethyl-6-isopropylindenyl) [bis(6-tert.-butyl-4-methyl-phenoxy)]zirkon
Dimethylsilandiylbis(2-methyl-1-benzindenyl) [bis(6-tert.-butyl-4-methyl-phenoxy)]zirkon
Dimethylsilandiylbis(2-ethyl-1-benzindenyl) [bis(6-tert.-butyl-4-methyl-phenoxy)]zirkon
Dimethylsilandiylbis(2-propyl-1-benzindenyl) [bis(6-tert.-butyl-4-methyl-phenoxy)]zirkon
Dimethylsilandiylbis(2-phenyl-1-benzindenyl) [bis(6-tert.-butyl-4-methyl-phenoxy)]zirkon
Diphenylsilandiylbis(2-methyl-1-benzindenyl) [bis(6-tert.-butyl-4-methyl-phenoxy)]zirkon
Phenylmethylsilandiylbis(2-methyl-1-benzindenyl) [bis(6-tert.-butyl-4-methyl-phenoxy)]zirkon
Ethandiylbis (2-methyl-1-benzindenyl) [bis(6-tert.-butyl-4-methyl-phenoxy)]zirkon
Dimethylsilandiylbis(2-methyl-1-tetrahydrobenzindenyl) [bis(6-tert.-butyl-4-methyl-phenoxy)]zirkon
Dimethylsilandiylbis(2-methyl-4-isopropyl-1-indenyl) [bis(6-tert.-butyl-4-methyl-phenoxy)]zirkon
Dimethylsilandiylbis(2-methyl-4-phenyl-1-indenyl) [bis(6-tert.-butyl-4-methyl-phenoxy)]zirkon
Dimethylsilandiylbis(2-methyl-4-naphtyl-1-indenyl) [bis(6-tert.-butyl-4-methyl-phenoxy)]zirkon
Dimethylsilandiylbis(2-methyl-4-{3,5-trifluoromethyl}phenyl-1-indenyl) [bis(6-tert.-butyl-4-methyl-phenoxy)]zirkon
Dimethylsilandiylbis(2-ethyl-4-isopropyl-1-indenyl) [bis(6-tert.-butyl-4-methyl-phenoxy)]zirkon
Dimethylsilandiylbis(2-ethyl-4-phenyl-1-indenyl) [bis(6-tert.-butyl-4-methyl-phenoxy)]zirkon
Dimethylsilandiylbis(2-ethyl-4-naphtyl-1-indenyl) [bis(6-tert.-butyl-4-methyl-phenoxy)]zirkon
Dimethylsilandiylbis(2-ethyl-4-{3,5-trifluoromethyl}phenyl-1-indenyl) [bis(6-tert.-butyl-4-methyl-phenoxy)]zirkon
Ethandiylbis(2-methyl-4-phenyl-1-indenyl) [bis(6-tert.-butyl-4-methyl-phenoxy)]zirkon
Ethandiylbis(2-methyl-4-naphtyl-1-indenyl) [bis(6-tert.-butyl-4-methyl-phenoxy)]zirkon
Ethandiylbis (2-methyl-4-{3,5-di-(trifluoromethyl)}phenyl-1-indenyl)zirkon

Die racemischen Metallocenkomplexe, vorzugsweise jene der allgemeinen Formel III, lassen sich im allgemeinen weiter modifizieren.

Insbesondere kann beispielsweise ein verbrückter Bisphenolatligand X¹ in dem Komplex III durch Substitution abgespalten und wiederverwendet werden. Geeignete Abspaltungs-(Substitutions-)methoden sind die Umsetzung der racemischen Metallocenkomplexe, vorzugsweise jene der allgemeinen Formel III mit einer Brönsted-Säure wie Halogenwasserstoff, also HF, HBr, HI, vorzugsweise HCl, welche in der Regel in Substanz oder als Lösung in Wasser oder organischen Lösungsmitteln wie Diethylether, THF angewandt wird. Hierbei entsteht üblicherweise das der Formel III analoge Di-Halogenid (X = F, Cl, Br, I) und das Bisphenol. Ein weiteres gut geeignetes Substitutions-Verfahren ist die Umsetzung der racemischen Metallocenkomplexe, vorzugsweise jene der allgemeinen Formel III mit Organo-Aluminiumverbindungen wie Tri-C₁-bis C₁₀-Alkylaluminium, also Trimethylaluminium, Triethylaluminium, Trin-butylaluminium, Tri-iso-butylaluminium. Hierbei entsteht nach derzeitigem Kenntnisstand im allgemeinen die zu III analoge Organo-Verbindung (X = organischer Rest, z.B. C₁- bis C₁₀-Alkyl, wie Methyl, Ethyl, n-Butyl, i-Butyl) und beispielsweise das Organo-Aluminiumbinaphtholat. Analog kann auch verfahren werden, wenn der Ligand X¹ in dem Komplex III zwei nicht verbrückte Phenolatliganden ist.

Bei den Spaltungsreaktionen werden die Komponenten üblicherweise im stöchiometrischen Verhältnis eingesetzt.

Die Spaltungsreaktionen finden im allgemeinen unter Erhaltung der Stereochemie der Metallocenkomplexe statt, das bedeutet, es findet im allgemeinen keine Umwandlung der racemischen Form in die meso-Form der Metallocenkomplexe statt.

Das erfindungsgemäße Verfahren zeichnet sich dadurch aus, daß es sehr selektiv die racem-Form von Metallocenkomplexen zugänglich macht. Besonders vorteilhaft lassen sich verbrückte Indenyl- oder Benzoindenyltyp-Metallocene erhalten, welche in der Nachbarschaft des Brückenglieds (sogenannte 2-Stellung) einen von Wasserstoff verschiedenen Liganden haben.

Die erfindungsgemäßen racemischen Metallocenkomplexe, insbesondere jene der allgemeinen Formell III oder ihre, beispielsweise durch Substitution der Phenolatliganden zugänglichen, bereits beschriebenen Derivate lassen sich als Katalysatoren oder in Katalysatorsystemen für die Polymerisation von olefinisch ungesättigten Verbindungen, wie Ethylen, Propylen, 1-Buten, 1-Hexen, 1-Octen, Styrol, verwenden. Besonders vorteilhaft kommen sie zur Geltung bei der stereoselektiven Polymerisation von prochiralen, olefinisch ungesättigten Verbindungen, wie Propylen, Styrol. Geeignete Katalysatoren oder Katalysatorsysteme, in welchen die erfindungsgemäßen racemischen Metallocenkomplexe als "Metallocenkomponente" fungieren können, werden üblicherweise mittels metalloceniumionenbildenden Verbindungen enthalten, wie beispielsweise in EP-A-0 700 935, Seite 7, Zeile 34 bis Seite 8, Zeile 21 und Formeln (IV) und (V) beschrieben. Weitere metalloceniumionenbildenden Verbindungen sind Alumoxan (RAlO)ₙ wie Methylaluminoxan.

Die erfindungsgemäßen racemischen Metallocenkomplexe, insbesondere jene der allgemeinen Formel III oder ihre, beispielsweise durch Abspaltung der Phenolatliganden zugänglichen, bereits beschriebenen Derivate lassen sich weiterhin als Reagenzien oder als Katalysatoren oder in Katalysatorsystemen in der stereoselektiven, insbesondere organischen Synthese verwenden. Beispielsweise seien genannt die stereoselektive Reduktionen oder stereoselektiven Alkylierungen von C=C-Doppelbindungen oder C=O-, C=N-Doppelbindungen.

### Beispiele

### Abkürzungen und Akronyme

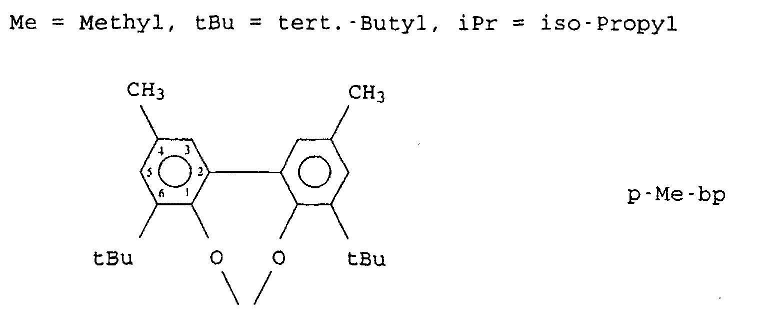

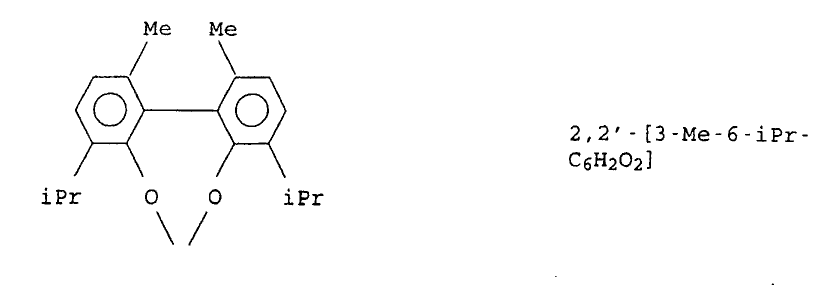

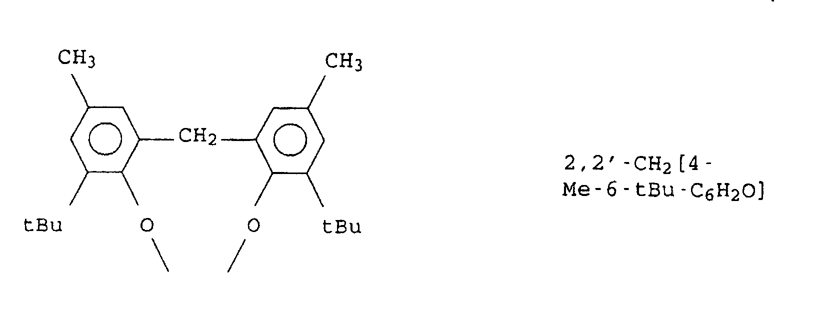

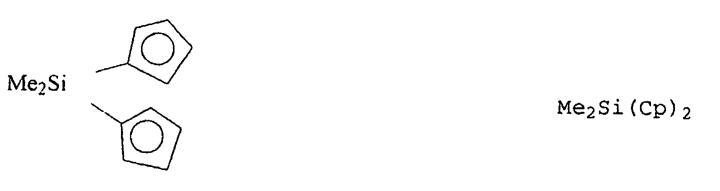

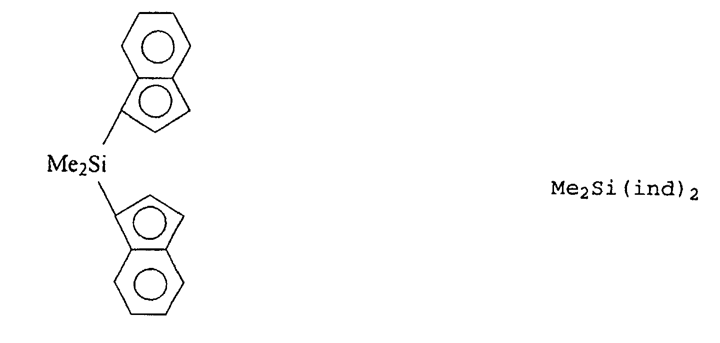

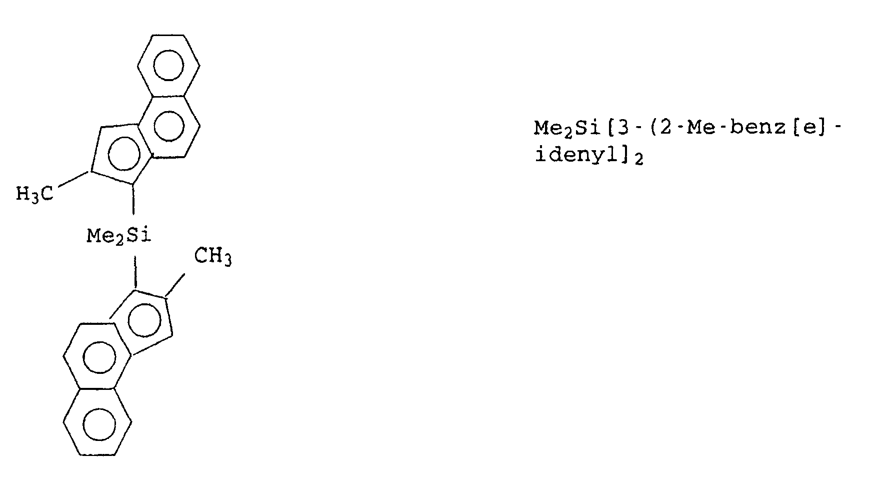

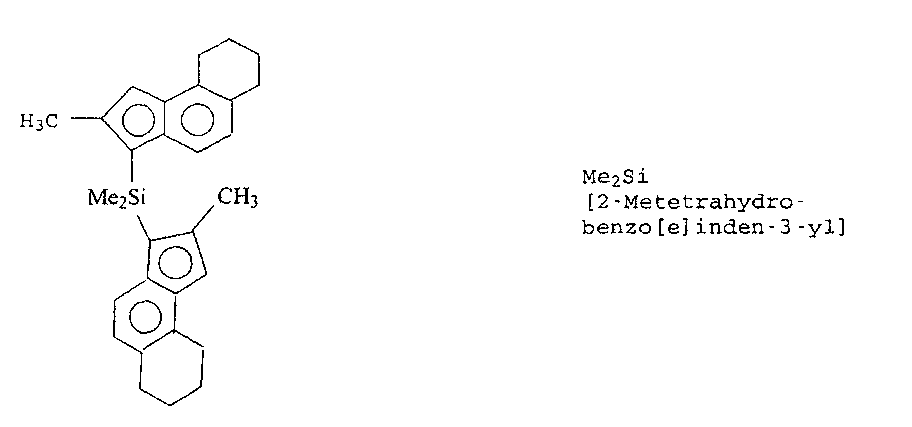

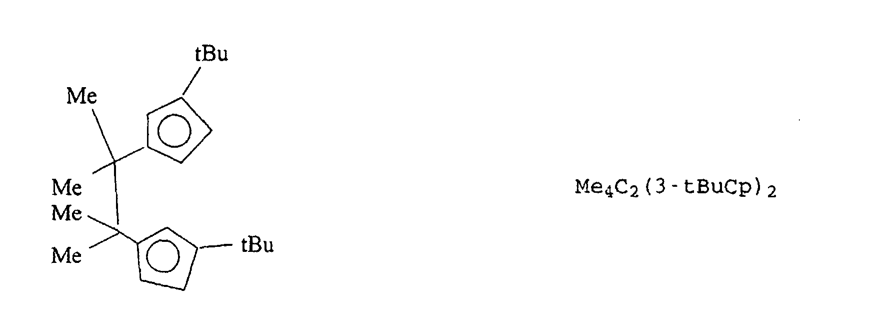

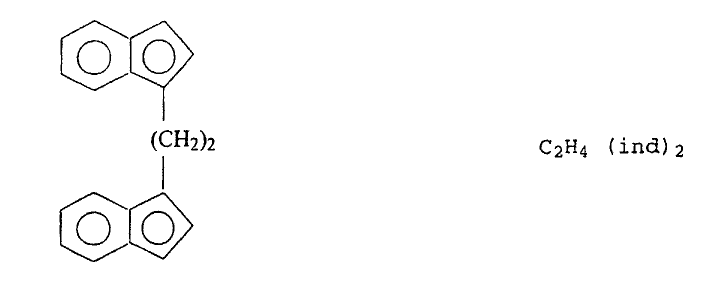

### Beispiel A

### Darstellung von Dichlorobis(6-t-butyl-4-methyl-phenoxy)zirkon-(THF)₂[p-Me-bpZrCl₂(THF)₂]

Zu einer Lösung von 3,27 g (0,01 mol) 2,2'-Dihydroxy-3,3'-di-tbutyl-5,5'-dimethyl-biphenyl in 150 ml THF wurden bei Raumtemperatur unter Rühren portionsweise 0,483 g (0,02 mol) NaH zugegeben, anschließend bei Raumtemperatur eine Stunde gerührt und dann die Suspension 24 h unter Rückfluß erhitzt. Nach Abkühlen der klaren, leicht orangefarbenen Lösung wurden unter Rühren portionsweise 3,8 g (0,01 mol) ZrCl₄x2THF zugegeben und die Suspension wieder 24 h unter Rückfluß erhitzt. Das entstandene NaCl wurde abfiltriert und das Lösungsmittel im Vakuum entfernt. Zum Rückstand wurden 100 ml Ether gegeben. Nach kurzer Zeit fiel aus der zunächst klaren Lösung ein weißer Niederschlag aus. Die Lösung wurde zur Vervollständigung der Kristallisation auf -30°C gekühlt. Der Niederschlag wurde abfiltriert und mit wenig kaltem Ether gewaschen. Man erhielt 4,59 g (73 % d.Th.) Dichlorobis(6-t-butyl-4-methylphenoxy)zirkonium x 2THF: [p-Me-bp]ZrCl₂x2THF.
¹H-NMR: (C₆D₆, 250 Mhz): 7,26 (d, 2H, C₆H₂), 7,04 (d, 2H, C₆H₂), 4,06 (b, 8H, THF), 2,21 (s, 6H, Me), 1,74 (s, 18H, t-Bu), 1,05 (b, 8H, THF)

### Beispiel 1

### Darstellung von rac-C₂H₄(ind₂Zr(p-Me-bp)

a) Darstellung von C₂H₄(ind)₂Mg(THF)₂
   Zu einer Lösung von 1,49 g (5,77 mmol) C₂H₄(indH)₂ in 150 ml Heptan wurden 6,3 ml Dibutylmagnesium in Heptan (6,3 mmol, 1 M Bu₂Mg-Lösung) bei Raumtemperatur zugegeben. Die Lösung wurde 5 h am Rückfluß erhitzt. Dabei entstand ein gelblicher Niederschlag. Die Suspension wurde auf -30°C gekühlt, der Niederschlag abfiltriert, mit wenig Heptan gewaschen und im Vakuum getrocknet. Das Rohprodukt wurde in wenig THF aufgenommen und mit Heptan überschichtet. Man erhielt das C₂H₄(ind)₂Mg(THF)₂ in Form schwach violett gefärbter Nadeln. Die Ausbeute betrug 1,86 g (76 % d.Th.)
b) Komplexierung
0,459 g (1,08 mmol) C₂H₄(ind)₂Mg(THF)₂ und 0,679 g (1,08 mmol) p-Me-bpZrCl₂(THF)₂ wurden trocken vermischt. Unter Rühren wurden 50 ml Toluol zugegeben und die Suspension zwei Tage bei Raumtemperatur gerührt. Dabei verfärbte sich die Lösung zunehmend gelb-orange und trübte ein. Der Niederschlag wurde abfiltriert, das Toluol des Filtrats im Vakuum entfernt und der Rückstand in 100 ml Pentan aufgenommen. Die leicht trübe Lösung wurde über Kieselgur filtriert und das Pentan im Vakuum entfernt. Man erhielt 0,495 g (68 % d.Th.) rac-C₂H₄(ind)₂Zr(p-Me-bp).
   ¹H-NMR: (C₆D₆, 250 Mhz): 7,40 (d, 2H, ind-C₆H₄), 7,21 (d, 2H, C₆H₂), 6,9 (m, 6H, ind-C₆H₄), 6,77 (d, 2H, C₆H₂), 6,00 (d, 2H, ind-C₃H₂), 5,76 (d, 2H, ind-C₉H₂), 3,29 (m, 4H, C₂H₄), 2,18 (s, 6H, Me), 1,36 (s, 18H, t-Bu).

### Beispiel 2

### Darstellung von rac-Me₂Si(2-Me-tetrahydrobenzo[e]inden-3-yl)₂-Zr((p-Me-bp)

a) Darstellung von Me₂Si(2-Me-tetrahydrobenzo[e]inden-3-yl)₂-Mg(THF)₂
   Zu einer Lösung von 1 g (2,35 mmol) rac-Me₂Si(2-Me-tetrahydrobenzo[e]inden-3-yl)₂Mg in 100 ml Heptan wurden 2,5 ml (2,5 mmol) einer 1 M Dibutylmagnesiumlösung in Heptan gegeben. Die Lösung wurde 6 h unter Rückfluß erhitzt. Nach dem Abkühlen auf Raumtemperatur wurden 0,4 ml THF zugegeben. Nach einigen Tagen bei Raumtemperatur wurden gelb grüne Nadeln von Me₂Si(2-Me-tetrahydrobenzo[e]inden-3-yl)₂Mg(THF)₂·(C₇H₁₆)0,5 durch Abdekantieren isoliert, mit wenig Heptan gewaschen und im Vakuum getrocknet. Es wurden 0,57 g (38 % d.Th.) des gewünschten Produktes erhalten.
   ¹H-NMR: (CH₂Cl₂, 600 Mhz): 7,53 (d, 2H, C₆H₂), 6,55 (d, 2H, C₆H₂), 6,28 (s, 2H, C₅H₁), 3,2-2,4 (m), 2,2-1,5 (m), 0,65 (d, 6H, Me₂Si)
b) Darstellung von rac-Me₂Si(2-Me-tetrahydrobenzo[e]inden-3-yl)₂-Zr(p-Me-bp)
   500 mg (0,85 mmol) Me₂Si(2-Me-tetrahydrobenzo[e]inden-3-yl)₂-Mg(THF)₂ und 556 mg (0,85 mmol) p-Me-bpZrCl₂(THF)₂ wurden trocken vermischt. Unter Rühren gab man 60 ml Toluol zu und rührte die Suspension zwei Tage bei Raumtemperatur. Dabei verfärbte sich die Lösung zunehmend gelb und trübte ein. Der Niederschlag wurde abfiltriert, das Toluol des Filtrats im Vakuum entfernt und der Rückstand in 100 ml Pentan aufgenommen. Die leicht trübe Lösung wurde filtriert und das Pentan im Vakuum entfernt. Man erhielt 0,498 g (70 % d.Th.) rac-Me₂Si(2-Me-tetrahydrobenzo[e]inden-3-yl)₂Zr(p-Me-bp).
   ¹H-NMR (₆D₆, 250 Mhz): 7,46 (d, 2H, ind-C₆H₂), 7,22 (d, 2H, C₆H₂), 6,73 (d, 2H, C₆H₂), 6,52 (d, 2H, ind-C₆H₂), 6,09 (s, 2H, C₅H₁), 2,46 (s, 6H, ind-Me), 2,21 (s, 6H, Me), 138 (s, 18H, t-Bu), 0,96 (s, 6H, Me₂Si)

### Beispiel 3

### Darstellung von Me₂SiCp₂Mg(THF)₂

Zu einer Lösung von 2,28 g (12,10 mmol) Me₂Si(CpH)₂ in 60 ml Heptan wurden 11,21 ml (12,20 mmol) einer 1,08 m Dibutylmagnesiumlösung in Heptan zugegeben. Dabei trübte sich die Lösung durch einen weißen Niederschlag ein. Die Lösung wurde 5 h unter Rückfluß erhitzt. Bai Raumtemperatur wurden 3 ml (37 mmol) THF zugegeben. Die Lösung wurde 1 h bei Raumtemperatur gerührt, im Hochvakuum auf ca. 30 ml eingeengt und bei -30°C kühlgestellt. Nach einigen Tagen wurde der weiße Niederschlag abfiltriert, mit wenig Heptan gewaschen und im Hochvakuum getrocknet. Es wurden 3,35 g (78 %) Me₂SiCp₂Mg(THF)₂ erhalten.
¹H-NMR-Verschiebungen in ppm (CD₂Cl₂, interner Standard TMS, 298 K, 250 MHz)

| | Zuordnung |
|---|---|
| 6,21 tp | C₅H₄ |
| 6,09 sb | C₅H₄ |
| 3,64 m | THF |
| 1,85 m | THF |
| 0,54 s | (CH₃)₂Si |

### Beispiel 4

### Darstellung von Me₄C₂(3-^{t}Bu-Cp)₂Mg(THF)₂

Zu einer Lösung von 6,78 g (20,76 mmol) Me₄C₂(3-tBu-CpH)₂ in 200 ml Heptan wurden 23 ml (23 mmol) einer 1 M Dibutylmagnesium-Lösung in Heptan gegeben. Die Lösung wurde unter Rückfluß 5 h erhitzt. Dabei war die Entwicklung von Butan zu beobachten. Zu der leicht gelblichen Lösung wurden 4 ml THF gegeben, eine Stunde bei Raumtemperatur gerührt, auf ein Viertel eingeengt und auf -30°C gekühlt. Nach einigen Tagen hatten sich farblose Kristalle gebildet. Diese wurden durch Dekantieren abgetrennt, mit wenig Heptan gewaschen und im Hochvakuum getrocknet. Dabei wurden 6,83 g (78 %) Me₄C₂(3-^{t}Bu-Cp)₂Mg(THF) erhalten. Weiteres Einengen der Mutterlauge und Kühlung auf -30°C ergaben nach gleicher Aufarbeitung weitere 0,35 g (4 %) Me₄C₂(3-^{t}Bu-Cp₂Mg(THF).
¹H-NMR-Verschiebungen in ppm (CD₂Cl₂, interner Standard TMS, 298 K, 600 MHz)

| | Zuordnung |
|---|---|
| 5,96 (t^{p}, 1H) | C₅H₃ (H2) |
| 5,56 (t^{p}, 1H) | C₅H₃ (H4) |
| 5,47 (t^{p}, 1H) | C₅H₃ (H5) |
| 1,54 (s, 6H) | C₂(CH₃)₂(CH₃1) |
| 1,40 (s, 6H) | C₂(CH₃)₂(CH₃2) |
| 1,16 (s, 18H) | C(CH₃)₃ |

### Beispiel 5

### Darstellung von Me₂Si(ind)₂Mg(THF)₂

Zu einer Lösung von 10,54 g (36,54 mmol) Me₂Si(indH)₂ in 150 ml Heptan wurden 37 ml (37 mmol) einer 1 M Dibutylmagnesiumlösung in Heptan gegeben. Die Lösung wurde 8 h unter starkem Rühren unter Rückfluß erhitzt. Dabei entstanden geringe Mengen eines Niederschlages. Bei Raumtemperatur wurden dann unter starkem Rühren 30 ml THF (0,37 mol) zugegeben. Sofort fiel ein weiß-rosafarbener Niederschlag aus. Dieser wurde abfiltriert, mit wenig Heptan gewaschen und im Hochvakuum getrocknet. Dabei wurden 9,98 g (61 %) Me₂Si(ind)₂Mg(THF)₂ erhalten. Das Filtrat wurde am Hochvakuum stark eingeengt und die Lösung bei -30°C kühlgestellt. Nach einigen Tagen wurden durch identische Aufarbeitung weitere 1,85 g (11 %) Me₂Si(ind)₂Mg(THF)₂ erhalten.
Gesamtausbeute: 72 %
¹H-NMR-Verschiebungen in ppm (CD₂Cl₂, interner Standard TMS, 298 K, 250 MHz)

| | Zuordnung |
|---|---|
| 7,96 (d, 2H) ³J (7,9 Hz) | C₆H₄ |
| 7,52 (d, 2H) ³J (7,9 Hz) | C₆H₄ |
| 6,98 (d, 2H) ³J (3,3 Hz) | C₅H₂ |
| 6,93 (t^{p}, 2H) | C₆H₄ |
| 6,83 (t^{p}, 2H) | C₆H₄ |
| 6,53 (d, 2H) ³J (3,1 Hz) | C₅H₂ |
| 3,03 (d, 8H) | THF |
| 1,51 (b, 8H) | THF |
| 0,94 (s, 6H) | (CH₃)₂Si |

### Beispiel 6

### Darstellung von Me₂Si(3-^{t}Bu-Cp)₂Mg(THF)₂

Zu einer Lösung von 5,37 g (17,86 mmol) Me₂Si(3-^{t}Bu-CpH)₂ in 200 ml Heptan wurden 19,65 ml (19,65 mmol) einer 1 M Dibutylmagnesiumlösung in Heptan gegeben. Die Reaktionslösung wurde 5 h unter Rückfluß erhitzt. Dabei war die Entwicklung von Butan zu beobachten. Die klare Lösung wurde auf ca. ein Dritte eingeengt. Bei Raumtemperatur wurden 3 ml (36,86 mmol) THF zugegeben und die Lösung auf -30°C gekühlt. Nach einigen Tagen entstanden teils farblose Kristalle, teils amorpher Niederschlag. Beides wurde durch Dekantieren isoliert, mit wenig Heptan gewaschen und im Hochvakuum getrocknet. Dabei wurden 5,1 g (61 %) Me₂Si(3-^{t}Bu-Cp)₂Mg(THF)₂ erhalten. Weiteres Einengen der Mutterlauge und Kühlung auf -30°C ergaben nach identischer Isolierung weitere 2,0 g (24 %) Me₂Si(3-^{t}-Bu-Cp)₂Mg(THF)₂.
¹H-NMR-Verschiebungen in ppm (D⁸-THF, interner Standard TMS, 298 K, 600 MHz)

| | Zuordnung |
|---|---|
| 6,14 (s, 2H) | C₅H₃ (H4) |
| 6,00 (s, 2H) | C₅H₃ (H2) |
| 5,67 (s, 2H) | C₅H₃ (H5) |
| 1,16 (s, 18H) | (CH₃)₃C |
| 0,37 (b, 6H) | (CH₃)₂Si |

### Beispiel 7

### Darstellung von Me₂Si(3-(2-Me-benz[e]indenyl)₂Mg(THF)₂

Zu einer Suspension von 1,09 g (2,61 mmol) Me₂Si(3-(3H-2-Me-benz-[e]indenyl)₂ in 80 ml Heptan wurden bei Raumtemperatur 3 ml (3 mmol) einer 1 M Dibutylmagnesiumlösung zugegeben. Die Suspension wurde unter Rückfluß zum Sieden erhitzt. Kurz vor dem Siedepunkt war die Lösung klar. Nach ca. 30 min trübte sich die Lösung durch ausgefallenes Produkt. Dabei war die Entwicklung von Butan zu beobachten. Nach 12-stündigem Sieden wurde zu der gelben Suspension bei Raumtemperatur 6 ml (74 mmol) THF gegeben. Der Feststoff verfärbte sich leuchtend gelb. Nach 1 h Rühren bei Raumtemperatur wurde die Suspension auf ca. 20 ml am Hochvakuum eingeengt, der Niederschlag abfiltriert, mit wenig Heptan gewaschen und am Hochvakuum getrocknet. Es wurden 1,29 g (85 %) Me₂Si(3-(2-Me-benz[e]indenyl)₂Mg(THF)₂ erhalten.
¹H-NMR-Verschiebungen in ppm (C₆D₆, interner Standard TMS, 298 K, 250 MHz)

| | Zuordnung |
|---|---|
| 8,45 (d, 2H) | C₆H₄ oder C₆H₂ |
| 8,34 (d, 2H) | C₆H₄ oder C₆H₂ |
| 8,23 (d, 2H) | C₆H₄ oder C₆H₂ |
| 7,82 (d, 2H) | C₆H₄ oder C₆H₂ |
| 7,42 (t^{p}, 2H) | C₆H₄ |
| 7,22 (t^{p}, C₆D₆) | C₆H₄ |
| 7,14 (s, 2H) | C₅H |
| 2,95 (s, 6H) | CH₃ |
| 2,79 (b, 8H) | THF |
| 1,10 (s, 6H) | (CH₃)₂Si |
| 1,07 (b, 8H) | THF |

### Beispiel 8

### Darstellung von rac-C₂H₄(ind)₂Zr-(2,2'(3-Me-6-ipr-C₆H₂O)₂)

0,172 g (0,40 mmol) 2,2'(3-ⁱPr-5-Me-C₆H₂O)₂Zr(THF)₂ und 0,245 g (0,40 mmol) C₂H₄(ind)₂Mg(THF)₂ wurden trocken vermischt und in 20 ml Toluol gelöst. Die Lösung verfärbte sich zunehmend gelb und trübte sich ein. Nach 3 h Rühren bei Raumtemperatur wurde das Lösungsmittel am Hochvakuum entfernt und der Rückstand in Hexan aufgenommen. Das MgCl₂(THF)₂ wurde abfiltriert und mit Hexan gewaschen. Das Lösungsmittel wurde am Hochvakuum entfernt und der Rückstand in 3 ml Toluol aufgenommen. Nach einigen Tagen bei Raumtemperatur entstanden hellgelbe Kristalle. Diese wurden durch Dekantieren isoliert und im Hochvakuum getrocknet. Dabei wurden 0,110 g (41%) rac-C₂H₄(ind)₂Zr-(2,2'(3-Me-6-iPr-C₆H₂O)₂) isoliert. 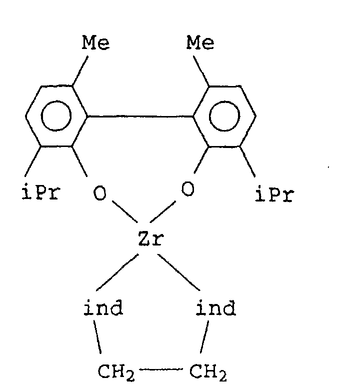 ¹H-NMR-Verschiebungen in ppm (C₆D₆, interner Standard TMS, 298 K, 600 MHz)

| xA | Zuordnung |
|---|---|
| 7,36 (d, 2H) ³J (8,5 Hz) | C₆H₄ (H7) |
| 7,15 (unter C₆D₆ Signal) | C₆H₄ (H4) |
| 6,94 (t^{p}, 2H) | C₆H₄ (H6) |
| 6,87 (t^{p}, 2H) | C₆H₄ (H5) |
| 6,80 (d, 2H) ³J (7,6 Hz) | C₆H₂ (H5) |
| 6,71 (d, 2H) ³J (8,5 Hz) | C₆H₄ (H4) |
| 5,93 (d, 2H) ³J (3,1 Hz) | C₅H₂ (H2) |
| 5,53 (d, 2H) ³J (3,0 Hz) | C₅H₂ (H3) |
| 3,23 (s, 6H) | C₂H₄ |
| 2,82 (sp, 2H) ³J (6,8 Hz) | (CH₃)₂CH |
| 1,91 (s, 6H) | CH₃ |
| 1,40 (d, 6H) ³J (7,1 Hz) | (CH₃)₂CH |
| 1,16 (d, 6H) ³J (6,6 Hz) | (CH₃)₂CH |

### Beispiel 9

### Darstellung von 2,2'-CH₂-(4-Me-6-^{t}Bu-C₆H₂O)₂ZrCl₂(THF)₂

Zu einer Lösung von 10,2 g (30 mmol) 2,2'CH₂-(4-Me-6-^{t}BuC₆H₂OH)₂ in 100 ml THF wurden portionsweise 1,44 g (60 mmol) NaH gegeben. Anschließend wurde die Suspension 24 h unter Rückfluß erhitzt. Bei Raumtemperatur wurden dann zu der orangenen, klaren Lösung 11,3 g (30 mmol) ZrCl₄(THF₂) zugegeben und die Lösung 12 h unter Rückfluß erhitzt. Das entstandene NaCl wurde abfiltriert, mit THF gewaschen und das Lösungsmittel des Filtrats am Hochvakuum entfernt. Zum aufgeblähten Rückstand wurden 50 ml Ether gegeben.

Nach kurzer Zeit fiel aus der, zunächst klaren Lösung, ein weißer Niederschlag aus. Dieser wurde durch Dekantieren abgetrennt, mit wenig Ether gewaschen und im Hochvakuum getrocknet. Es wurden 12,38 g (64 %) 2,2'CH₂-(4-Me-6-^{t}Bu-C₆H₂O)₂ZrCl₂(THF)₂ erhalten. Die Mutterlauge und die Waschlösung wurden vereinigt, im Hochvakuum stark eingeengt und bei -30°C kühlgestellt. Nach einigen Tagen wurde der kristalline Niederschlag auf gleiche Weise isoliert. Dabei wurden weitere 2,11 g (11 %) 2,2'CH₂-(4-Me-6-^{t}Bu-C₆H₂O)₂-ZrCl₂(THF)₂ erhalten.
Gesamtausbeute: 75 %
¹H-NMR-Verschiebungen in ppm (CD₂Cl₂, interner Standard TMS, 298 K, 250 MHz)

| | Zuordnung |
|---|---|
| 7,16 (d, 2H) ⁴J (1,8 Hz) 7,27 | C₆H₂ |
| 6,96 (d, 2H) ⁴J (1,9 Hz) 7,05 | C₆H₂ |
| 5,3 (b,1H) | CH₂ |
| 4,45 (m, 8H) | THF |
| 3,33 (d, 1H) ³J (1,9 Hz) | CH₂ |
| 2,31 (s, 6H) 2,34 | CH₃ |
| 2,04 (m, 8H) | THF |
| 1,49 (s, 18H) 1,56 | (CH₃)₃C |

### Beispiel 10

### Darstellung von rac-Me₂SiCp₂Zr(2,2'CH₂-(4-Me-6-^{t}BuC₆H₂O)₂)

0,374 g (1,05 mmol) Me₂SiCp₂Mg(THF)₂ und 0,680 g (1,05 mmol) 2,2'CH₂-(4-Me-6-^{t}BuC₆H₂O)₂ZrCl₂(THF)₂ wurden trocken vermischt und in 30 ml Toluol gelöst. Die Lösung wurde 4 Tage bei Raumtemperatur gerührt, wobei sie sich gelb verfärbte und trüb wurde. Das Lösungsmittel wurde am Hochvakuum entfernt und der Rückstand in Heptan aufgenommen. Das MgCl₂(THF)₂ wurde abfiltriert, mit Heptan gewaschen und das Filtrat auf ca. 30 ml eingeengt. Nach einigen Tagen bei Raumtemperatur bildeten sich gelbe Kristalle. Diese wurden durch Dekantieren isoliert und im Hochvakuum getrocknet. Es wurden 0,311 g )48 %) Me₂SiCp₂Zr(2,2'CH₂-(4-Me-6-^{t}BuC₆H₂O)₂) isoliert. Einengen der Mutterlauge und Kühlung auf -30°C ergaben nach einigen Tagen mit identischer Aufarbeitung weitere 0,154 g (24 %) Me₂SiCp₂Zr(2,2'CH₂-(4-Me-6-^{t}BuC₆H₂O)₂) isoliert. Gesamtausbeute 72 %
¹H-NMR-Verschiebungen in ppm (CD₂Cl₂, interner Standard TMS, 298 K, 600 MHz)

| | Zuordnung |
|---|---|
| 7,09 (d, 2H) ⁴J (1,3 Hz) | C₆H₂ (H6) |
| 6,92 (d, 2H) ⁴J (1,5 Hz) | C₆H₂ (H4) |
| 6,85 (t^{p}, 2H) | C₅H₄ |
| 6,17 (t^{p}, 2H) | C₅H₄ |
| 6,01 (t^{p}, 2H) | C₅H₄ |
| 5,95 (t^{p}, 2H) | C₅H₄ |
| 4,21 (d, 1H) ³J (13,8 Hz) | CH₂ |
| 3,11 (d, 1H) ³J (13,8 Hz) | CH₂ |
| 2,26 (s, 6H) | CH₃ |
| 1,41 (s, 18H | (CH₃)₃CH |
| 0,811(s, 6H) | (CH₃)₂Si |

### Beispiel 11

### Darstellung von rac-Me₂Si(3-(2-Me-benz[e]indenyl)₂Zr(2,2'(3-^{t}Bu-5-Me-C₆H₂O)₂)

17 mg (0,029 mmol) Me₂Si(3-(2-Me-benz[e]indenyl)₂Mg(THF)₂ und 18,3 mg (0,0291 mmol) 2,2'(3-^{t}Bu-5-Me-C₆H₂O)₂ZrCl₂(THF)₂ wurden in einem NMR-Rohr trocken vermischt und in 0,5 ml C₆D₆ gelöst. Nach 6 Tagen bei Raumtemperatur ist die Lösung gelb. Neu entstanden ist ein weißer Niederschlag. Es wurde ein ¹H-NMR-Spektrum aufgenommen.
¹H-NMR-Verschiebungen in ppm (C₆D₆, interner Standard TMS, 298 K, 250 MHz)

| | Zuordnung |
|---|---|
| 8,63 (d) | C₆H₄ oder C₆H₂ |
| 7,97 (d) | C₆H₄ oder C₆H₂ |
| 7,78 (m) | C₆H₄ oder C₆H₂ |
| 7,82 | C₆H₄ oder C₆H₂ |
| 7,52 (m) | C₆H₄ oder C₆H₂ |
| 7,35-7,03 (m) | C₆H₄ oder C₆H₂, C₆H₂ (Phenoxyligand) |
| 6,97 (d) | C₆H₂ (Phenoxyligand) |
| 6,84 (s) | C₅H |
| 3,43 (sb) | THF (frei) |
| 3,25 (s) | CH₃ |
| 2,27 (s) | CH₃ (Phenoxyligand) |
| 1,45 (m) | THF (frei) |
| 1,23 (s) | (CH₃)₃C |
| 1,16 (s) | (CH₃)₂Si |

### Beispiel 12

### Darstellung von Cl₂Zr(O-2,6-Me₂C₆H₃)₂(THF)₂

5,21 g (13,81 mmol) ZrCl₄(THF)₂ wurden in 150 ml Toluol suspendiert. Hierzu gab man bei 0°C 16 g (82,3 mmol) Me₃SiO-2,6-(CH₃)₂-C₆H₃ und die Suspension wurde anschließend 12 h unter Rückfluß erhitzt. Das Lösungsmittel wurde abgezogen und der Rückstand in 80 ml THF aufgenommen. Diese Lösung wurde mit Hexan überschichtet. Nach einigen Tagen bei Raumtemperatur bildeten sich farblose Kristalle, die durch Dekantieren isoliert und im Hochvakuum getrocknet wurden. Man erhielt 1,82 g (3,31 mmol) Cl₂Zr(O-2,6-Me₂C₆H₃)₂(THF)₂. Weiteres Einengen der Mutterlauge und Kühlung auf -30°C ergaben nach identischer Isolierung weitere 2,20 g (4,01 mmol) Cl₂Zr(O-2,6-Me₂C₆H₃)₂(THF)₂.
Gesamtausbeute: 4,02 g (7,32 mmol, 53%) Cl₂Zr(O-2,6-Me₂C₆H₃)₂(THF)₂

### Darstellung von rac-C₂H₄(ind)₂Zr(O-2,6-Me₂C₆H₃)₂

15,7 mg (0,028 mmol) Cl₂Zr(O-2,6-Me₂C₆H₃)₂ (THF)₂ und 12,1 mg (0,028 mmol) C₂H₄(ind)₂Mg(THF)₂ wurden in einem NMR-Rohr trocken vermischt und in 0,5 ml C₆D₆ gelöst. Nach 24 h bei Raumtemperatur hatte sich die Lösung gelb verfärbt und durch ausfallendes MgCl₂(THF)₂ eingetrübt. Es wurde ein ¹H-NMR-Spektrum aufgenommen, das zeigte, daß ausschließlich die racemo-Form von C₂H₄(ind)₂Zr-(O-2,4-Me₂C₆H₅)₂ gebildet wurde. 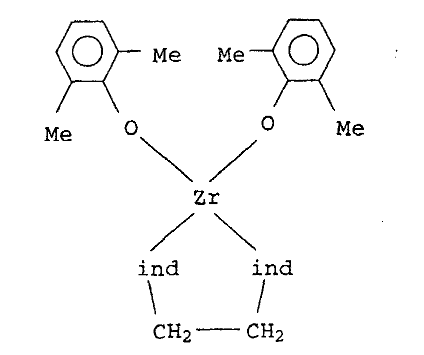 ¹H-NMR-Verschiebungen in ppm (C₆D₆, interner Standard TMS, 298 K, 250 NMz)

| | Zuordnung |
|---|---|
| 7,46 (d, 2H) | C₆H₄ |
| 7,02 (d, 2H) | C₆H₄ |
| 6,92 (d, 4H) | C₆H₃ |
| 6,82 (m, 4H) | C₆H₃ oder C₆H₄ |
| 6,44 (tp, 2H) | C₅H₄ |
| 6,14 (d, 2H) | C₅H₂ |
| 5,94 (d, 2H) | C₅H₂ |
| 3,52 (m, 2H) | C₂H₄ |
| 3,17 (m, 2H) | C₂H₄ |
| 1,97 (s, 6H) | CH₃ |

### Beispiel 13

### Darstellung von rac-Me₂Si(ind)₂Zr(O-2,6-Me₂C₆H₃)₂

25 mg (0,045 mmol) Me₂Si(ind)₂Mg(THF)₂ und 20,5 mg (0,045 mmol) Cl₂Zr(O-2,6-Me₂C₆H₃)₂(THF)₂ wurden in einem NMR-Rohr trocken vermischt und in 0,5 ml C₆D₆ gelöst. Nach 24 h bei Raumtemperatur hatte sich die Lösung gelb verfärbt und durch ausfallendes MgCl₂(THF)₂ eingetrübt. Es wurde ein ¹H-NMR-Spektrum aufgenommen, daß zeigte, das ausschließlich die racemo-Form von Me₂Si(ind)₂Zr-(O-2,6-Me₂C₆H₃)₂ gebildet wurde.
¹H-NMR-Verschiebungen in ppm (C₆D₆, interner Standard TMS, 298 K, 250 NM_{z})

| | Zuordnung |
|---|---|
| 7,57 (d, 2H) | C₆H₄ |
| 7,20 (d, 2H) | C₆H₄ |
| 6,96 - 6,70 (m) | C₆H₃ oder C₆H₄ |
| 6,47 (s, 4H) | C₅H₂ |
| 6,44 (tp, 2H) | C₆H₄ |
| 2,37 - 1,97 (m, 6H) | CH₃ |
| 0,81 (s, 6H) | Me₂Si |

## Patentansprüche

1. Verfahren zur Herstellung von racemischen Metallocenkomplexen durch Umsetzung von verbrückten oder nicht-verbrückten Übergangsmetallaromatkomplexen der allgemeinen Formel I 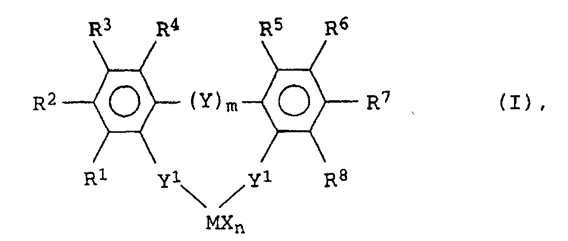 in der die Substituenten und Indizes folgende Bedeutung haben:
M Titan, Zirkonium, Hafnium, Vanadium, Niob, Tantal, Chrom, Molybdän, Wolfram, sowie Elemente der III. Nebengruppe des Periodensystems und der Lanthanoiden,
X gleich oder verschieden Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
n eine ganze Zahl zwischen 1 und 4, wobei n der Wertigkeit von M minus der Zahl 2 entspricht,
R¹, R⁸ gleich oder verschieden Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
R² bis R⁷ gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen, und die genannten Reste können vollständig oder teilweise mit Heteroatomen substituiert sein,
R¹⁰, R¹¹ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
Y, Y¹ gleich oder verschieden 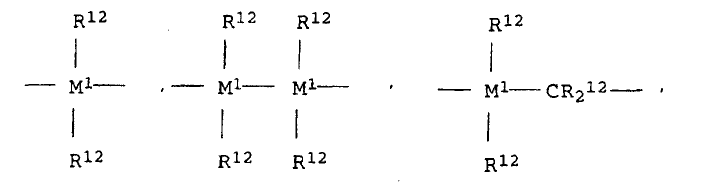 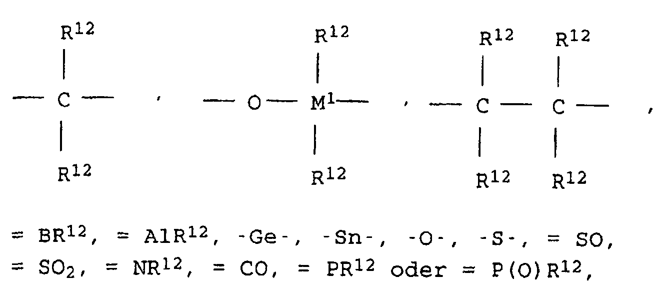
wobei
R¹² gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
M¹ Silicium, Germanium oder Zinn ist und
m 0, 1, 2, 3 bedeutet,
oder Y nicht-verbrückend ist und für zwei Reste R' und R" steht, wobei
R' und R" gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
mit Cyclopentadienylderivaten von Alkali- oder Erdalkalimetallen und gegebenenfalls anschließende Substitution des verbrückten Aromatliganden oder der beiden nicht verbrückten Aromatliganden.

2. Verfahren nach Anspruch 1, wobei R¹ und R⁸ in Formel I sperrige Substituenten sind.

3. Verfahren nach den Ansprüchen 1 bis 2, wobei m in Formel I 0 bedeutet.

4. Verfahren nach den Ansprüchen 1 bis 3, wobei Y¹ gleich ist und Sauerstoff bedeutet.

5. Verfahren nach den Ansprüchen 1 bis 4, wobei Cyclopentadienylderivate des Magnesiums verwendet werden.

6. Racemische Metallocenkomplexe der allgemeinen Formel III 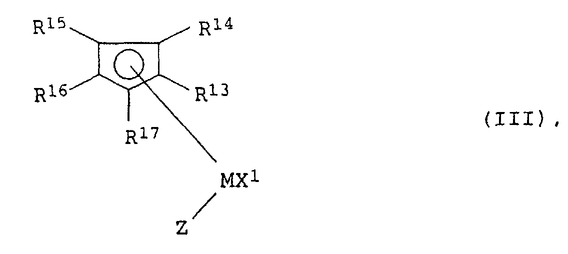 in der die Substituenten und Indizes folgende Bedeutung haben:
M Titan, Zirkonium, Hafnium, Vanadium, Niob, Tantal, Chrom, Molybdän, Wolfram, sowie Elemente der III. Nebengruppe des Periodensystems und der Lanthanoiden,
X¹ 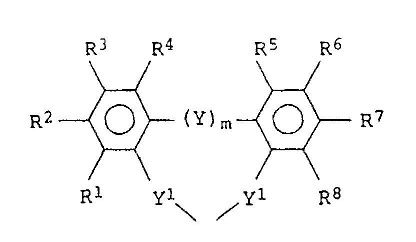
wobei:
R¹, R⁸ gleich oder verschieden Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
R² bis R⁷ gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein,
Y, Y¹ gleich oder verschieden 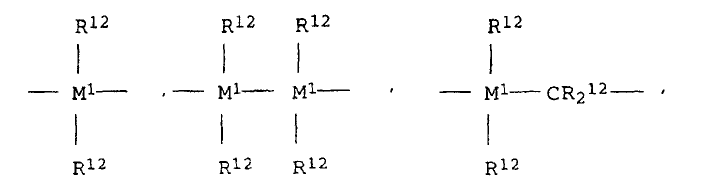 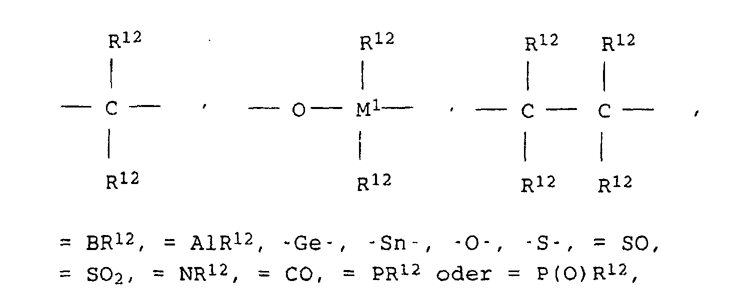
wobei
R¹² gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
M¹ Silicium, Germanium oder Zinn ist und
m 0, 1, 2, 3 bedeutet,
oder Y nicht-verbrückend ist und für zwei Reste R' und R" steht, wobei
R' und R" gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
R¹³ bis R¹⁷ gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
R¹⁸ gleich oder verschieden C₁- bis C₁₀-Alkyl, C₆- bis C₁₅-Aryl oder C₃- bis C₁₀-Cycloalkyl,
Z für 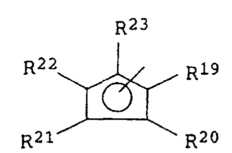 steht,
wobei die Reste
R¹⁹ bis R²³ gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
R²⁴ gleich oder verschieden C₁- bis C₁₀-Alkyl, C₆- bis C₁₅-Aryl oder C₃- bis C₁₀-Cycloalkyl,
oder wobei die Reste
R¹⁶ und Z gemeinsam eine Gruppierung -[T(R²⁵)(R²⁶)]_{q}-Ebilden, in der
T gleich oder verschieden sein kann und für Silicium, Germanium, Zinn oder Kohlenstoff steht,
R²⁵, R²⁶ für Wasserstoff, C₁- bis C₁₀-Alkyl, C₃- bis C₁₀-Cycloalkyl oder C₆- bis C₁₅-Aryl
q für die Zahlen 1, 2, 3 oder 4,
E für 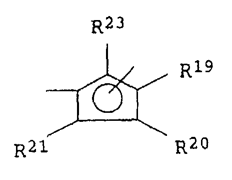 oder A steht, wobei A ―O― , ―S―, 〉NR²⁷ oder 〉PR²⁷ bedeutet,
mit R²⁷ gleich oder verschieden C₁- bis C₁₀-Alkyl, C₆- bis C₁₅-Aryl, C₃- bis C₁₀-Cycloalkyl, Alkylaryl oder Si(R²⁸)₃
mit R²⁸ gleich oder verschieden C₁- bis C₁₀-Alkyl, C₆bis C₁₅-Aryl, C₃- bis C₁₀-Cycloalkyl oder Alkylaryl.

7. Racemische Metallocenkomplexe nach Anspruch 6, wobei R¹⁷ und R²³ nicht Wasserstoff bedeuten, wenn R¹⁶ und Z gemeinsam eine Gruppierung - [T(R²⁵)(R²⁶)]_{q}-E- bilden.

8. Verwendung von racemischen Metallocenkomplexen gemäß den Ansprüchen 6 bis 7 als Katalysatoren oder als Bestandteil von Katalysatoren für die Polymerisation von olefinisch ungesättigten Verbindungen oder als Reagenzien oder Katalysatoren in der stereoselektiven Synthese.

## Claims

1. A process for preparing racemic metallocene complexes by reacting bridged or unbridged aromatic transition metal complexes of the formula I 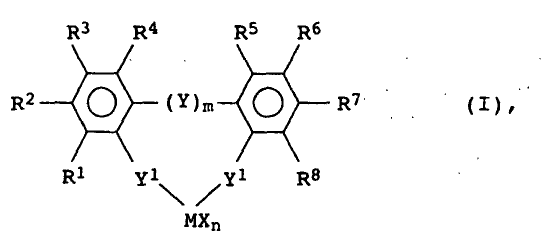 where the substituents and indices have the following meanings:
M is titanium, zirconium, hafnium, vanadium, niobium, tantalum, chromium, molybdenum, tungsten or an element of transition group III of the Periodic Table and the lanthanides,
X are identical or different and are each fluorine, chlorine, bromine, iodine, hydrogen C₁-C₁₀-alkyl, C₆-C₁₅-aryl, alkylaryl having from 1 to 10 carbon atoms in the alkyl radical and from 6 to 20 carbon atoms in the aryl radical, -OR¹⁰ or -NR¹⁰R¹¹,
n is an integer from 1 to 4, where n corresponds to the valence of M minus 2,
R¹, R⁸ are identical or different and are each fluorine, chlorine, bromine, iodine, C₁-C₂₀-alkyl, 3- to 8-membered cycloalkyl which in turn may bear a C₁-C₁₀-alkyl group as substituent, C₆-C₁₅-aryl, alkylaryl having from 1 to 10 carbon atoms in the alkyl radical and from 6 to 20 carbon atoms in the aryl radical, arylalkyl having from 1 to 10 carbon atoms in the alkyl radical and from 6 to 20 carbon atoms in the aryl radical, Si(R⁹)₃ where R⁹ are identical or different and are each C₁-C₂₀-alkyl, C₃-C₁₀-cycloalkyl, C₆-C₁₅-aryl,
where the radicals mentioned may be partially or fully substituted by heteroatoms,
R² to R⁷ are identical or different and are each hydrogen, C₁-C₂₀-alkyl, 3- to 8-membered cycloalkyl which in turn may bear a C₁-C₁₀-alkyl radical as substituent, C₆-C₁₅-aryl, alkylaryl having from 1 to 10 carbon atoms in the alkyl radical and from 6 to 20 carbon atoms in the aryl radical, arylalkyl having from 1 to 10 carbon atoms in the alkyl radical and from 6 to 20 carbon atoms in the aryl radical, Si(R⁹)₃ where R⁹ are identical or different and are each C₁-C₂₀-alkyl, C₃-C₁₀-cycloalkyl, C₆-C₁₅-aryl, and adjacent radicals R² to R⁷ may form saturated, partially saturated or unsaturated cyclic groups having from 4 to 15 carbon atoms, and the radicals mentioned can be fully or partially substituted by heteroatoms,
R¹⁰, R¹¹ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
Y, Y¹ are identical or different and are each 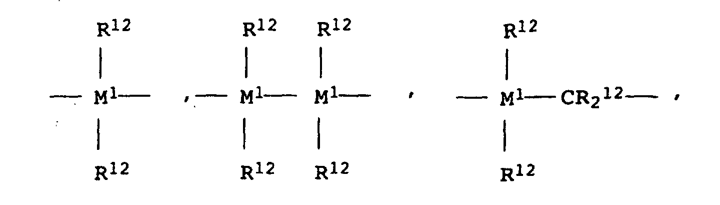 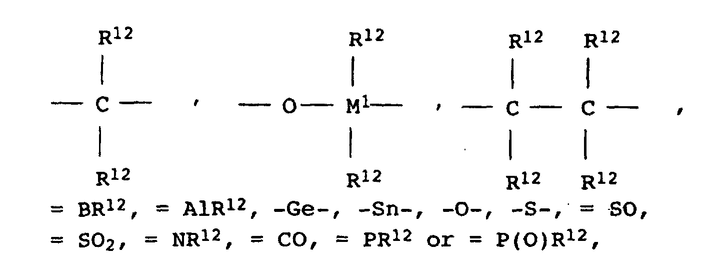
where
R¹² are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl, C₇-C₄₀-alkylaryl, or two radicals R¹² together with the atoms connecting them form a ring,
M¹ is silicon, germanium or tin and
m is 0, 1, 2 or 3,
or Y is non-bridging and is two radicals R' and R", where
R' and R" are identical or different and are each hydrogen, fluorine, chlorine, bromine, iodine, C₁-C₂₀-alkyl, 3- to 8-membered cycloalkyl which in turn may bear a C₁-C₁₀-alkyl radical as substituent, C₆-C₁₅-aryl, alkylaryl having from 1 to 10 carbon atoms in the alkyl radical and from 6 to 20 carbon atoms in the aryl radical, arylalkyl having from 1 to 10 carbon atoms in the alkyl radical and from 6 to 20 carbon atoms in the aryl radical, Si(R⁹)₃ where R⁹ are identical or different and are each C₁-C₂₀-alkyl, C₃-C₁₀-cycloalkyl, C₆-C₁₅-aryl,
or together with adjacent radicals R⁴ or R⁵ form saturated, partially saturated or unsaturated cyclic groups having from 4 to 15 carbon atoms, and the radicals mentioned can be fully or partially substituted by heteroatoms,
with cyclopentadienyl derivatives of alkali metals or alkaline earth metals and, if desired, subsequently replacing the bridged aromatic ligand or the two unbridged aromatic ligands.

2. A process as claimed in claim 1, wherein R¹ and R⁸ in formula I are bulky substituents.

3. A process as claimed in claim 1 or 2, wherein m in formula I is 0.

4. A process as claimed in any of claims 1 to 3, wherein Y¹ are identical and are each oxygen.

5. A process as claimed in any of claims 1 to 4, wherein cyclopentadienyl derivatives of magnesium are used.

6. A racemic metallocene complex of the formula III 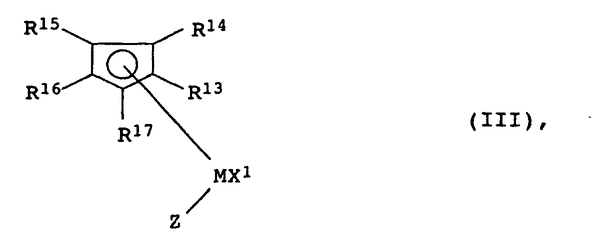 where the substituents and indices have the following meanings:
M is titanium, zirconium, hafnium, vanadium, niobium, tantalum, chromium, molybdenum, tungsten or an element of transition group III of the Periodic Table and the lanthanides,
X¹ 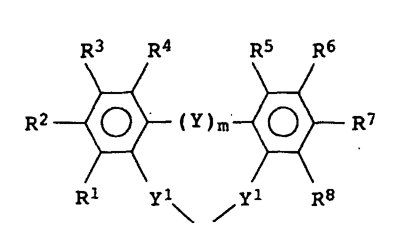
where:
R¹, R⁸ are identical or different and are each fluorine, chlorine, bromine, iodine, C₁-C₂₀-alkyl, 3- to 8-membered cycloalkyl which may in turn bear a C₁-C₁₀-alkyl group as substituent, C₆-C₁₅-aryl, alkylaryl having from 1 to 10 carbon atoms in the alkyl radical and from 6 to 20 carbon atoms in the aryl radical, arylalkyl having from 1 to 10 carbon atoms in the alkyl radical and from 6 to 20 carbon atoms in the aryl radical, Si(R⁹)₃ where R⁹ are identical or different and are each C₁-C₂₀-alkyl, C₃-C₁₀-cycloalkyl, C₆-C₁₅-aryl, where the radicals mentioned may be partially or fully substituted by heteroatoms,
R² to R⁷ are identical or different and are each hydrogen, C₁-C₂₀-alkyl, 3- to 8-membered cycloalkyl which may in turn bear a C₁-C₁₀-alkyl radical as substituent, C₆-C₁₅-aryl, alkylaryl having from 1 to 10 carbon atoms in the alkyl radical and from 6 to 20 carbon atoms in the aryl radical, arylalkyl having from 1 to 10 carbon atoms in the alkyl radical and from 6 to 20 carbon atoms in the aryl radical, Si(R⁹)₃ where R⁹ are identical or different and are each C₁-C₂₀-alkyl, C₃-C₁₀-cycloalkyl, C₆-C₁₅-aryl, and adjacent radicals R² to R⁷ may form saturated, partially saturated or unsaturated cyclic groups having from 4 to 15 carbon atoms and the radicals mentioned may be fully or partially substituted by heteroatoms,
Y, Y¹ are identical or different and are each 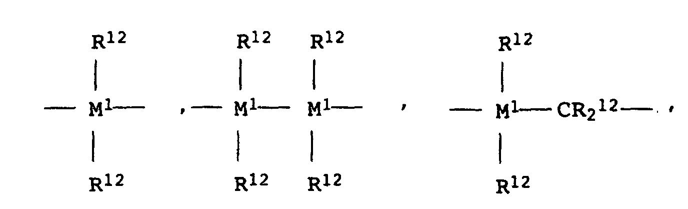 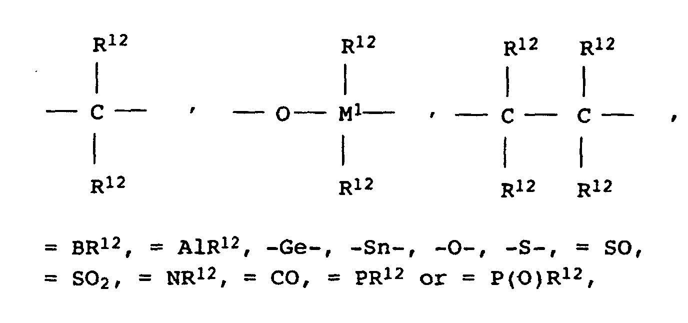
where
R¹² are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl, C₇-C₄₀-alkylaryl, or two radicals R¹² together with the atoms connecting them form a ring,
M¹ is silicon, germanium or tin and
m is 0, 1, 2 or 3,
or Y is non-bridging and is two radicals R' and R", where
R' and R" are identical or different and are each hydrogen, fluorine, chlorine, bromine, iodine, C₁-C₂₀-alkyl, 3- to 8-membered cycloalkyl which in turn may bear a C₁-C₁₀-alkyl radical as substituent, C₆-C₁₅-aryl, alkylaryl having from 1 to 10 carbon atoms in the alkyl radical and from 6 to 20 carbon atoms in the aryl radical, arylalkyl having from 1 to 10 carbon atoms in the alkyl radical and from 6 to 20 carbon atoms in the aryl radical, Si(R⁹)₃ where R⁹ are identical or different and are each C₁-C₂₀-slkyl, C₃-C₁₀-cycloalkyl, C₆-C₁₅-aryl,
or together with adjacent radicals R⁴ or R⁵ form saturated, partially saturated or unsaturated cyclic groups having from 4 to 15 carbon atoms, and the radicals mentioned can be fully or partially substituted by heteroatoms,
R¹³ to R¹⁷ are identical or different and are each hydrogen, C₁-C₂₀-alkyl, 5- to 7-membered cycloalkyl which may in turn bear a C₁-C₁₀-alkyl group as substituent, C₆-C₁₅-aryl or arylalkyl, where adjacent radicals may together form cyclic groups having from 4 to 15 carbon atoms, or Si(R¹⁸)₃ where
R¹⁸ are identical or different and are each C₁-C₁₀-alkyl, C₆-C₁₅-aryl or C₃-C₁₀-cycloalkyl,
Z is 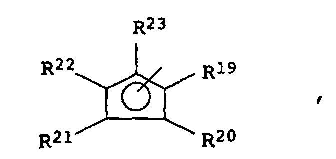
where the radicals
R¹⁹ to R²³ are identical or different and are each hydrogen, C₁-C₂₀-alkyl, 5- to 7-membered cycloalkyl which may in turn bear a C₁-C₁₀-alkyl group as substituent, C₆-C₁₅-aryl or arylalkyl, where adjacent radicals may together form cyclic groups having from 4 to 15 carbon atoms, or Si(R²⁴)₃ where
R²⁴ are identical or different and are each C₁-C₁₀-alkyl, C₆-C₁₅-aryl or C₃-C₁₀-cycloalkyl,
or where the radicals
R¹⁶ and Z together form a group -[T(R²⁵)(R²⁶)]_{q}-E-, where
T can be identical or different and are each silicon, germanium, tin or carbon,
R²⁵, R²⁶ are each hydrogen, C₁-C₁₀-alkyl, C₃-C₁₀-cycloalkyl or C₆-C₁₅-aryl
q is 1, 2, 3 or 4,
E is 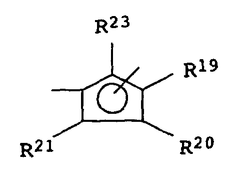 or A, where A is ―O― , ―S―, 〉NR²⁷ or 〉PR²⁷,
where R²⁷ are identical or different and are each C₁-C₁₀-alkyl, C₆-C₁₅-aryly C₃-C₁₀-cycloalkyl, alkylaryl or Si(R²⁸)₃
where R²⁸ are identical or different and are each C₁-C₁₀-alkyl, C₆-C₁₅-aryl, C₃-C₁₀-cycloalkyl or alkylaryl.

7. A racemic metallocene complex as claimed in claim 6, wherein R¹⁷ and R²³ are not hydrogen if R¹⁶ and Z together form a group -[T(R²⁵)(R²⁶)]_{q}-E-.

8. The use of racemic metallocene complexes as claimed in claim 6 or 7 as catalysts or as constituents of catalysts for the polymerization of olefinically unsaturated compounds or as reagents or catalysts in stereoselective synthesis.

## Revendications

1. Procédé pour la préparation de complexes de métallocènes racémiques, au moyen d'une réaction des complexes de composés aromatiques de métal de transition, pontés ou non pontés, de formule générale I 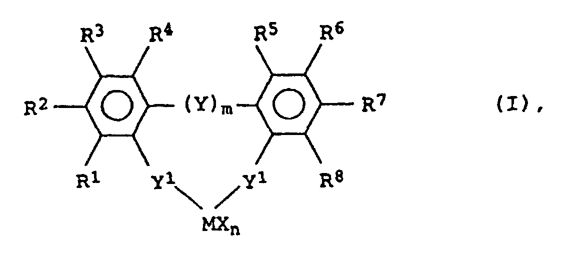 dans laquelle les substituants et les indices prennent les significations suivantes :
M représente un atome de titane, de zirconium, d'hafnium, de vanadium, de niobium, de tantale, de chrome, de molybdène, de tungstène ou d'un élément du IIIème sous-groupe de la Classification Périodique des Eléments ou des lanthanides,
X sont identiques ou différents et représentent un atome de fluor, de chlore, de brome, d'iode, d'hydrogène, un groupe alkyle en C₁ à C₁₀, aryle en C₆ à C₁₅, alkylaryle présentant 1 à 10 atomes de C dans le reste alkyle et 6 à 20 atomes de C dans le reste aryle, -OR¹⁰ ou -NR¹⁰R¹¹,
n représente un nombre entier de 1 à 4, où n correspond à la valence de M moins le nombre 2,
R¹, R⁸ sont identiques ou différents et représentent un atome de fluor, de chlore, de brome, d'iode, un groupe alkyle en C₁ à C₂₀, cycloalkyle présentant 3 à 8 maillons et comprenant, quant à lui, éventuellement un groupe alkyle en C₁ à C₁₀ en tant que reste, un groupe aryle en C₆ à C₁₅, alkylaryle présentant 1 à 10 atomes de C dans le reste alkyle et 6 à 20 atomes de C dans le reste aryle, arylalkyle présentant 1 à 10 atomes de C dans le reste alkyle et 6 à 20 atomes de C dans le reste aryle, Si(R⁹)₃ avec les R⁹ étant identiques ou différents et représentant un groupe alkyle en C₁ à C₂₀, cycloalkyle en C₃ à C₁₀, ou aryle en C₆ à C₁₅,
où les restes mentionnés sont éventuellement substitués, partiellement ou complètement, par des hétéroatomes,
R² à R⁷ sont identiques ou différents et représentent un atome d'hydrogène, un groupe alkyle en C₁ à C₂₀, cycloalkyle comprenant, quant à lui, éventuellement un reste alkyle en C₁ à C₁₀ et présentant 3 à 8 maillons, un groupe aryle en C₆ à C₁₅, alkylaryle présentant 1 à 10 atomes de C dans le reste alkyle et 6 à 30 atomes de C dans le reste aryle, un groupe arylalkyle présentant 1 à 10 atomes de C dans le reste alkyle et 6 à 20 atomes de C dans le reste aryle, Si(R⁹)₃ avec les R⁹ étant identiques ou différents et représentant un groupe alkyle en C₁ à C₂₀, cycloalkyle en C₃ à C₁₀, ou aryle en C₆ à C₁₅, les restes R² à R⁷ vicinaux représentant éventuellement un groupe cyclique non saturé, partiellement saturé ou saturé et présentant 4 à 15 atomes de C, et les restes mentionnés étant éventuellement substitués, complètement ou partiellement, par des hétéroatomes,
R¹⁰, R¹¹ représentant un groupe alkyle en C₁ à C₁₀, aryle en C₆ à C₁₅, alkylaryle, arylalkyle, fluoroalkyle ou fluoroaryle présentant chacun 1 à 10 atomes de C dans le reste alkyle et 6 à 20 atomes de C dans le reste aryle,
Y, Y¹ sont identiques ou différents et représentent 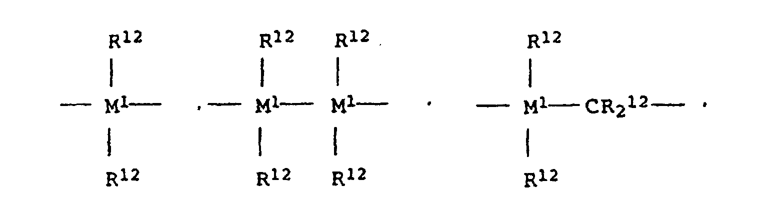 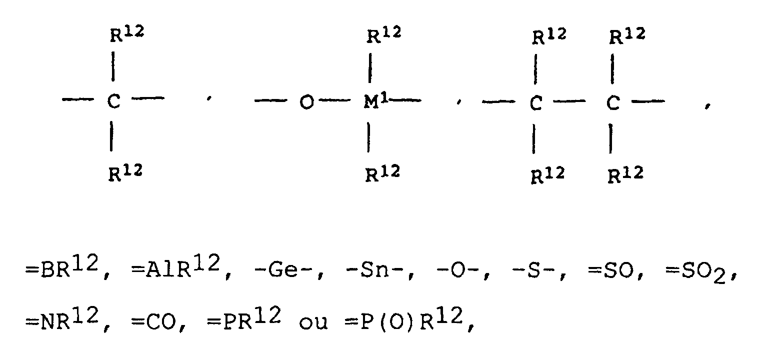
où
R¹² sont identiques ou différents et représentent un atome d'hydrogène, d'halogène, un groupe alkyle en C₁ à C₁₀, fluoroalkyle en C₁ à C₁₀, fluoroaryle en C₆ à C₁₀, aryle en C₆ à C₁₀, alcoxy en C₁ à C₁₀, alcényle en C₂ à C₁₀, arylalkyle en C₇ à C₄₀, arylalcényle en C₈ à C₄₀, alkylaryle en C₇ à C₄₀, ou bien où deux restes R¹² et les atomes qui les lient forment conjointement un cycle,
M¹ représente un atome de silicium, de germanium ou d'étain, et
m vaut 0, 1, 2 ou 3,
ou bien Y ne crée pas de pont et représente deux restes R' et R'', où
R' et R'' sont identiques ou différents et représentent un atome d'hydrogène, de fluor, de chlore, de brome, d'iode, un groupe alkyle en C₁ à C₂₀, cycloalkyle présentant 3 à 8 maillons et comprenant, quant à lui, éventuellement un groupe alkyle en C₁ à C₁₀ en tant que reste, un groupe aryle en C₆ à C₁₅, alkylaryle présentant 1 à 10 atomes de C dans le reste alkyle et 6 à 20 atomes de C dans le reste aryle, arylalkyle présentant 1 à 10 atomes de C dans le reste alkyle et 6 à 20 atomes de C dans le reste aryle, Si(R⁹)₃, les R⁹ étant identiques ou différents et représentant un groupe alkyle en C₁ à C₂₀, cycloalkyle en C₃ à C₁₀, aryle en C₆ à C₁₅, ou bien représentent, ensemble avec leurs restes vicinaux R⁴ ou R⁵, un groupe cyclique non saturé, partiellement saturé ou saturé et présentant 4 à 15 atomes de C, et où les restes mentionnés sont éventuellement substitués, complètement ou partiellement, par des hétéroatomes,
avec les dérivés cyclopentadiényle de métaux alcalins ou alcalino-terreux, réaction qui est éventuellement suivie d'une substitution du ligand aromatique ponté ou des deux ligands aromatiques non pontés.

2. Procédé selon la revendication 1, dans lequel R¹ et R⁸ dans la formule I sont des substituants encombrants.

3. Procédé selon les revendications 1 à 2, dans lequel m dans la formule I vaut 0.

4. Procédé selon les revendications 1 à 3, dans lequel les Y¹ sont identiques et représentent un atome d'oxygène.

5. Procédé selon les revendications 1 à 4, dans lequel on met en oeuvre des dérivés cyclopentadiényle du magnésium.

6. Complexes de métallocènes racémiques de formule générale III 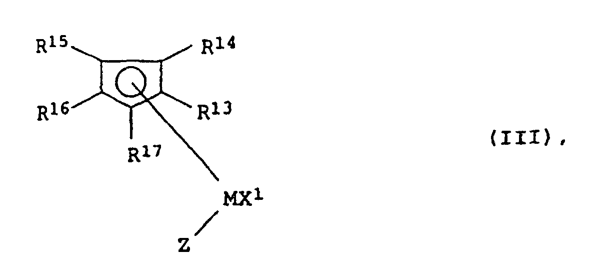 dans laquelle les substituants et les indices prennent les significations suivantes :
M représente un atome de titane, de zirconium, d'hafnium, de vanadium, de niobium, de tantale, de chrome, de molybdène, de tungstène ou d'un élément du IIIème sous-groupe de la Classification Périodique des Eléments ou des lanthanides,
X¹ représente 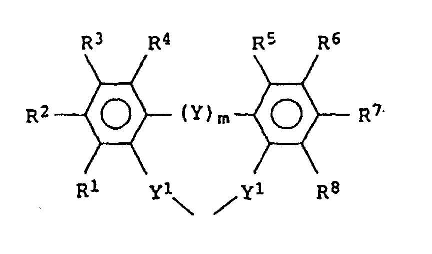
où
R¹, R⁸ sont identiques ou différents et représentent un atome de fluor, de chlore, de brome, d'iode, un groupe alkyle en C₁ à C₂₀, cycloalkyle présentant 3 à 8 maillons et comprenant, quant à lui, éventuellement un groupe alkyle en C₁ à C₁₀ en tant que reste, un groupe aryle en C₆ à C₁₅, alkylaryle présentant 1 à 10 atomes de C dans le reste alkyle et 6 à 20 atomes de C dans le reste aryle, arylalkyle présentant 1 à 10 atomes de C dans le reste alkyle et 6 à 20 atomes de C dans le reste aryle, Si(R⁹)₃ où les R⁹ sont identiques ou différents et représentent un groupe alkyle en C₁ à C₂₀, cycloalkyle en C₃ à C₁₀, ou aryle en C₆ à C₁₅,
où les restes mentionnés sont éventuellement substitués, partiellement ou complètement, par des hétéroatomes,
R² à R⁷ sont identiques ou différents et représentent un atome d'hydrogène, un groupe alkyle en C₁ à C₂₀, cycloalkyle présentant 3 à 8 maillons et comprenant éventuellement un reste alkyle en C₁ à C₁₀, un groupe aryle en C₆ à C₁₅, alkylaryle présentant 1 à 10 atomes de C dans le reste alkyle et 6 à 30 atomes de C dans le reste aryle, un groupe arylalkyle présentant 1 à 10 atomes de C dans le reste alkyle et 6 à 20 atomes de C dans le reste aryle, Si(R⁹)₃ où les R⁹ sont identiques ou différents et représentent un groupe alkyle en C₁ à C₂₀, cycloalkyle en C₃ à C₁₀, ou aryle en C₆ à C₁₅,
les restes R² à R⁷ vicinaux représentant éventuellement un groupe cyclique non saturé, partiellement saturé ou saturé et présentant 4 à 15 atomes de C, et les restes mentionnés étant éventuellement substitués, complètement ou partiellement, par des hétéroatomes,
Y, Y¹ sont identiques ou différents et représentent 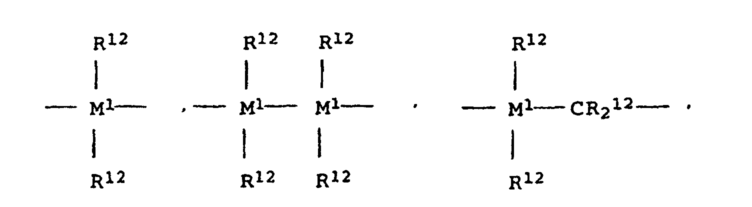 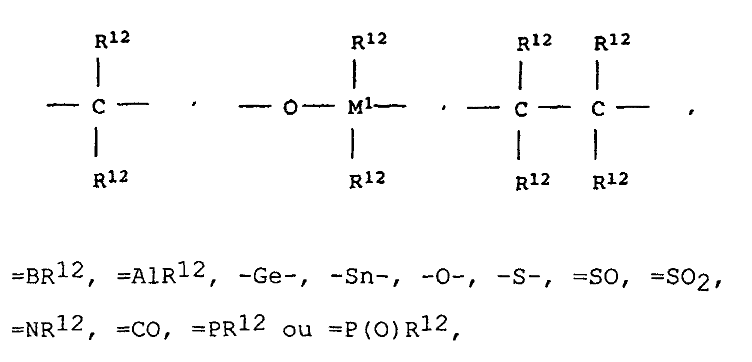
où
R¹² sont identiques ou différents et représentent un atome d'hydrogène, d'halogène, un groupe alkyle en C₁ à C₁₀, fluoroalkyle en C₁ à C₁₀, fluoroaryle en C₆ à C₁₀, aryle en C₆ à C₁₀, alcoxy en C₁ à C₁₀, alcényle en C₂ à C₁₀, arylalkyle en C₇ à C₄₀, arylalcényle en C₈ à C₄₀, alkylaryle en C₇ à C₄₀, ou bien où deux restes R¹² et les atomes qui les lient forment conjointement un cycle,
M¹ représente un atome de silicium, de germanium ou d'étain, et
m vaut 0, 1, 2 ou 3,
ou bien Y ne crée pas de pont et représente deux restes R' et R'', où
R' et R'' sont identiques ou différents et représentent un atome d'hydrogène, de fluor, de chlore, de brome, d'iode, un groupe alkyle en C₁ à C₂₀, cycloalkyle présentant 3 à 8 maillons et comprenant, quant à lui, éventuellement un groupe alkyle en C₁ à C₁₀ en tant que reste, un groupe aryle en C₆ à C₁₅, alkylaryle présentant 1 à 10 atomes de C dans le reste alkyle et 6 à 20 atomes de C dans le reste aryle, arylalkyle présentant 1 à 10 atomes de C dans le reste alkyle et 6 à 20 atomes de C dans le reste aryle, Si(R⁹)₃, les R⁹ étant identiques ou différents et représentant un groupe alkyle en C₁ à C₂₀, cycloalkyle en C₃ à C₁₀, aryle en C₆ à C₁₅, ou bien représentent, ensemble avec leurs restes vicinaux R⁴ ou R⁵, un groupe cyclique non saturé, partiellement saturé ou saturé et présentant 4 à 15 atomes de C, et où les restes mentionnés étant éventuellement substitués, complètement ou partiellement, par des hétéroatomes,
R¹³ à R¹⁷ sont identiques ou différents et représentent un atome d'hydrogène, un groupe alkyle en C₁ à C₂₀, cycloalkyle présentant 5 à 7 maillons et comprenant éventuellement un groupe alkyle en C₁ à C₁₀ en tant que substituant, un groupe arylalkyle ou aryle en C₆ à C₁₅, où éventuellement les restes vicinaux représentent conjointement un groupe cyclique présentant 4 à 15 atomes de C, ou bien Si(R¹⁸)₃ où
R¹⁸ sont identiques ou différents et représentent un groupe alkyle en C₁ à C₁₀, aryle en C₆ à C₁₅ ou cycloalkyle en C₃ à C₁₀,
Z représente 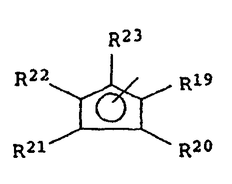
où les restes
R¹⁹ à R²³ sont identiques ou différents et représentent un atome d'hydrogène, un groupe alkyle en C₁ à C₂₀, cycloalkyle présentant 5 à 7 maillons et comprenant, quant à lui, éventuellement un reste alkyle en C₁ à C₁₀ en tant que substituant, un groupe arylalkyle ou aryle en C₆ à C₁₅, où éventuellement les restes vicinaux représentent conjointement un groupe cyclique présentant 4 à 15 atomes de C, ou bien Si(R²⁴)₃
où
R²⁴ sont identiques ou différents et représentent un groupe alkyle en C₁ à C₁₀, aryle en C₆ à C₁₅ ou cycloalkyle en C₃ à C₁₀,
ou bien où les restes
R¹⁶ et Z représentent conjointement un groupement -[T(R²⁵)(R²⁶)]_{q}-E- dans lequel
T sont identiques ou différents et représentent un atome de silicium, de germanium, d'étain ou de carbone,
R²⁵, R²⁶ représentent un atome d'hydrogène, un groupe alkyle en C₁ à C₁₀, cycloalkyle en C₃ à C₁₀ ou aryle en C₆ à C₁₅,
q représente les nombres 1, 2, 3 ou 4,
E représente 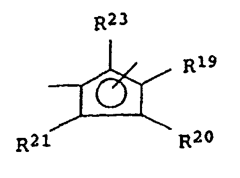 ou A, où A représente -O-, -S-, ou >NR²⁷ ou >PR²⁷,
avec R²⁷ étant identiques ou différents et représentant un groupe alkyle en C₁ à C₁₀, aryle en C₆ à C₁₅, cycloalkyle en C₃ à C₁₀, alkylaryle ou Si(R²⁸)₃,
avec R²⁸ étant identiques ou différents et représentant un groupe alkyle en C₁ à C₁₀, aryle en C₆ à C₁₅, cycloalkyle en C₃ à C₁₀ ou alkylaryle.

7. Complexes de métallocènes racémiques selon la revendication 6, dans lesquels, à condition que R¹⁶ et Z représentent conjointement un groupement -[T(R²⁵)(R²⁶)]_{q}-E-, R¹⁷ et R²³ ne représentent pas un atome d'hydrogène.

8. Mise en oeuvre de complexes de métallocènes racémiques selon les revendications 6 à 7, en tant que catalyseur ou en tant que composant de catalyseur pour la polymérisation de composés à insaturation oléfinique, ou en tant que réactif ou catalyseur dans la synthèse stéréosélective.
